# EUROPEAN PATENT APPLICATION

(11) **EP 4 221 364 A1**
(43) Date of publication of application: **02.08.2023**
(21) Application number: 21885288.7
(22) Date of filing: 29.10.2021
(51) Int. Cl.: H04W 52/02

(54) **MODE SWITCHING METHOD AND RELATED DEVICE**

(30) Priority: 31.10.2020 CN 202011198840
(71) Applicant: Huawei Technologies Co., Ltd., Shenzhen, Guangdong 518129 (CN)
(72) Inventor: WANG, Ting, Shenzhen, Guangdong 518129 (CN); LYU, Yongxia, Shenzhen, Guangdong 518129 (CN); WANG, Jun, Shenzhen, Guangdong 518129 (CN); MA, Jianglei, Ottawa, Ontario K2K3J1 (CA)
(74) Representative: Maiwald GmbH
(86) International application number: PCT/CN2021/127267
(87) International publication number: WO 2022/089561

(57) **Abstract**

Embodiments of this application disclose a mode switching method and an apparatus. The method includes: A second communication apparatus sends a first signal to a first communication apparatus after determining a mode of the first communication apparatus, where the first signal indicates the first communication apparatus to switch the mode, the mode includes a first mode and a second mode, and there is a correspondence between the mode and a service type of the first communication apparatus. The first communication apparatus may implement one-click switching or fast switching; and switch from the first mode to the second mode, or switch from the second mode to the first mode, to reduce signaling overheads, reduce a switching delay, and meet data transmission requirements in different modes.

## Description

This application claims priority to Chinese Patent Application No. 202011198840.5, filed with the China National Intellectual Property Administration on October 31, 2020 and entitled "MODE SWITCHING METHOD AND RELATED APPARATUS", which is incorporated herein by reference in its entirety.

### TECHNICAL FIELD

Embodiments of this application relate to the communication field, and in particular, to a mode switching method and a related apparatus.

### BACKGROUND

A new radio (new radio, NR) system is a proposed fifth generation (fifth generation, 5G) cell mobile communication system. Compared with a long term evolution (long term evolution, LTE) system, the NR system can implement larger transmission bandwidth, more arrays of transceiver antennas, a higher transmission rate, and a more flexible scheduling mechanism with smaller granularity.

Three states are defined in the NR, which are an idle (idle) state, an inactive (inactive) state, and a connected (connected) state. A terminal device may be in only one state at a moment. When the terminal device is in the idle state, the terminal device may maintain only a basic link to an access network device. No radio resource control (Radio resource control, RRC) link is established between the terminal device and the access network device, and therefore data transmission cannot be performed. When the terminal device is in the inactive state, the terminal device may maintain only the basic link to the access network device, and the terminal device may perform small packet data transmission with the access network device. When the terminal device is in the connected state, the terminal device may perform data transmission with the access network device.

When the access network device indicates the terminal device to change a state, the access network device needs to communicate with the terminal device by using a plurality of pieces of RRC signaling. The RRC signaling is higher layer signaling. As a result, signaling overheads are large, and a signaling transmission delay is large.

### SUMMARY

A first aspect of embodiments of this application provides a mode switching method, including: A first communication apparatus receives a first signal from a second communication apparatus, where the first signal indicates the first communication apparatus to switch a mode, the mode includes a first mode and a second mode, and there is a correspondence between the mode and a service type of the first communication apparatus; and the first communication apparatus switches the mode.

When the first communication apparatus is under a specific service type, the first communication apparatus communicates with the second communication apparatus. The first communication apparatus may communicate different content in different modes, to implement energy saving of the communication apparatus and improve communication efficiency. In addition, under different service types, standards for determining that the first communication apparatus is in the first mode or the second mode may be different. When a first communication device switches the service type, the first communication apparatus may send a mode switching request signal to the second communication apparatus, to implement mode switching, meet communication performance under the different service types, and improve communication efficiency.

When indicating the first communication apparatus to switch the mode (change a state), the second communication apparatus sends the first signal to the first communication apparatus to notify the first communication apparatus of switching the mode. The mode of the first communication apparatus includes two modes: the first mode and the second mode, and the mode corresponds to the service type of the first communication apparatus, so that mode customization is implemented, energy consumption is reduced while different communication requirements corresponding to various service types are met, signaling overheads and a delay of mode switching performed by the first communication apparatus are reduced, and communication efficiency is improved.

In a possible implementation, the first signal may be a physical layer signal.

In this embodiment of this application, when the second communication apparatus indicates the first communication apparatus to switch the mode, the physical layer signal is used, to reduce interaction of higher layer signaling between the first communication apparatus and the second communication apparatus, reduce the delay, and improve communication efficiency.

In a possible implementation, there is the correspondence between the service type of the first communication apparatus and the mode. The following describes the first communication apparatus under several different service types. When the service type of the first communication apparatus is an enhanced mobile broadband (enhanced mobile broadband, eMBB) type, the first mode includes an idle state and/or an inactive state, and may have one or more functions of the idle state and/or the inactive state in an NR system; and the second mode includes a connected state, and may have one or more functions of the connected state in the NR system. When the service type of the first communication apparatus is an internet of things (internet of things, loT) type, the first mode includes an idle state, and may have one or more functions of the idle state in the NR system; and the second mode includes an inactive state and/or a connected state, and may have one or more functions of the inactive state and/or the connected state in the NR system. Alternatively, when the service type of the first communication apparatus is an ultra-reliable low-latency communication (ultra-reliable low-latency communication, URLLC) type, the first mode includes an idle state and/or an inactive state, and may have one or more functions of the idle state function and/or the inactive state in the NR system; and the second mode includes a connected state, and may have one or more functions of the connected state in the NR system. When the service type of the first communication apparatus is a CPE type, the first mode includes a first connected state, and may have one or more functions of the connected state in the NR system, and the second mode includes a second connected state, and may have one or more functions of the connected state in the NR system.

In this embodiment of this application, for several common service types, specific correspondences between the modes and the service types are proposed. According to the foregoing design, different two modes or two states may be defined for different terminal types. Compared with existing three states, signaling overheads of mode switching can be reduced, function customization of a mode or state is implemented, and energy saving of the communication apparatus is implemented on demand.

In a possible implementation, the first signal may be downlink control information DCI, a signal carried on a physical downlink shared channel PDSCH, or a paging message.

In this embodiment of this application, a plurality of possible implementations are proposed for the first signal, to improve realizability of the solution. In addition, different implementations are applicable to different scenarios, to meet communication requirements in the different scenarios, and reduce the delay.

In a possible implementation, the first communication apparatus may send response information to the second communication apparatus.

In this embodiment of this application, the first communication apparatus sends the response information to the second communication apparatus to indicate that the first communication apparatus successfully receives the first signal, and the first communication apparatus switches the mode, thereby enhancing reliability of mode switching of the first communication apparatus. The first communication apparatus and the second communication apparatus have a consistent understanding of a mode or state.

In a possible implementation, the response information includes uplink control information UCI, an uplink sequence, an uplink signal, or higher layer signaling.

In this embodiment of this application, a plurality of possible implementations are proposed for the response information, to improve realizability of the solution. In addition, different implementations are applicable to different scenarios, to meet communication requirements in the different scenarios.

In a possible implementation, the first signal may indicate a group of communication apparatuses to switch modes. The first communication apparatus is an apparatus in the group of communication apparatuses.

In this embodiment of this application, the second communication apparatus sends a request to only the first communication apparatus in the group of communication apparatuses. Compared with sending a switching signal to each communication apparatus, signal overheads can be reduced, energy saving of the communication apparatus can be implemented, and communication efficiency can be improved.

In a possible implementation, the first communication apparatus may send second response information to the second communication apparatus.

In this embodiment of this application, the first communication apparatus may send the second response information to the second communication apparatus, to enhance reliability of mode switching. The second communication apparatus and the first communication apparatus have the consistent understanding of the mode or state.

In a possible implementation, after the second communication apparatus receives the second response information from the first communication apparatus, the second communication apparatus may send a mode switching indication to a third communication apparatus, where the third communication apparatus is an apparatus in the group of communication apparatuses. In this embodiment of this application, the second communication apparatus may notify the third communication apparatus in the communication apparatus group of switching a mode. The third communication apparatus may switch the mode after receiving the mode switching indication of the second communication apparatus. That is, modes of the communication apparatus group may be consistent, so that data communication is completed in cooperation, and group communication efficiency is improved.

In a possible implementation, the second response information may be uplink control information UCI, an uplink sequence, an uplink signal, or higher layer signaling.

In this embodiment of this application, the response information and the second response information may be the same or different.

In this embodiment of this application, a plurality of possible implementations are proposed for the second response information, to improve realizability of the solution. In addition, different implementations are applicable to different scenarios, to meet communication requirements in the different scenarios.

In a possible implementation, when the mode of the first communication apparatus is the second mode, the first communication apparatus switches from the second mode to the first mode based on a timing device such as a timer.

In this embodiment of this application, when the first communication apparatus receives no signal from an access network device within preset duration, the first communication apparatus switches from the second mode to the first mode. The first communication apparatus may implement fast switching, for example, switching from the second mode to the first mode, to reduce the signaling overheads, reduce the switching delay, implement energy saving of a terminal device, and improve communication efficiency.

A second aspect of embodiments of this application provides a mode switching method, including:

A second communication apparatus determines a mode of a first communication apparatus; and the second communication apparatus sends a first signal to the first communication apparatus, where the first signal indicates the first communication apparatus to switch the mode, the mode include a first mode and a second mode, and there is a correspondence between the mode and a service type of the first communication apparatus.

When the first communication apparatus is under a specific service type, the first communication apparatus communicates with the second communication apparatus. The first communication apparatus may communicate different content in different modes, to implement energy saving of the communication apparatus and improve communication efficiency. In addition, under different service types, standards for determining that the first communication apparatus is in the first mode or the second mode may be different. When a first communication device switches the service type, the first communication apparatus may send the first signal to the second communication apparatus, to implement mode switching, meet communication performance under the different service types, and improve communication efficiency.

When indicating the first communication apparatus to switch the mode (change a state), the second communication apparatus sends the first signal to the first communication apparatus to notify the first communication apparatus of switching the mode. The mode of the first communication apparatus includes two modes: the first mode and the second mode, and the mode corresponds to the service type of the first communication apparatus, so that mode customization is implemented, energy consumption is reduced while different communication requirements corresponding to various service types are met, signaling overheads and a delay of mode switching performed by the first communication apparatus are reduced, and communication efficiency is improved.

In a possible implementation, the first signal may be a physical layer signal.

In this embodiment of this application, when the second communication apparatus indicates the first communication apparatus to switch the mode, the physical layer signal is used, to reduce interaction of higher layer signaling between the first communication apparatus and the second communication apparatus, reduce the delay, and improve communication efficiency.

In a possible implementation, there is the correspondence between the service type of the first communication apparatus and the mode. The following describes the first communication apparatus under several different service types. When the service type of the first communication apparatus is an enhanced mobile broadband (enhanced mobile broadband, eMBB) type, the first mode includes an idle state and/or an inactive state, and may have one or more functions of the idle state and/or the inactive state in an NR system; and the second mode includes a connected state, and may have one or more functions of the connected state in the NR system. When the service type of the first communication apparatus is an internet of things (internet of things, loT) type, the first mode includes an idle state, and may have one or more functions of the idle state in the NR system; and the second mode includes an inactive state and/or a connected state, and may have one or more functions of the inactive state and/or the connected state in the NR system. Alternatively, when the service type of the first communication apparatus is an ultra-reliable low-latency communication (ultra-reliable low-latency communication, URLLC) type, the first mode includes an idle state and/or an inactive state, and may have one or more functions of the idle state function and/or the inactive state in the NR system; and the second mode includes a connected state, and may have one or more functions of the connected state in the NR system. When the service type of the first communication apparatus is a CPE type, the first mode includes a first connected state, and may have one or more functions of the connected state in the NR system, and the second mode includes a second connected state, and may have one or more functions of the connected state in the NR system.

In this embodiment of this application, for several common service types, specific correspondences between the modes and the service types are proposed. According to the foregoing design, different two modes or two states may be defined for different terminal types. Compared with existing three states, signaling overheads of mode switching can be reduced, function customization of a mode or state is implemented, and energy saving of the communication apparatus is implemented on demand.

In a possible implementation, the first signal may be downlink control information DCI, a signal carried on a physical downlink shared channel PDSCH, or a paging message.

In this embodiment of this application, a plurality of possible implementations are proposed for the first signal, to improve realizability of the solution. In addition, different implementations are applicable to different scenarios, to meet communication requirements in the different scenarios, reduce the delay, and improve communication efficiency.

In a possible implementation, the second communication apparatus may receive response information from the first communication apparatus.

In this embodiment of this application, the second communication apparatus receives the response information from the first communication apparatus. The response information indicates that the first communication apparatus successfully receives the first signal, thereby enhancing reliability of mode switching of the first communication apparatus. The first communication apparatus and the second communication apparatus have a consistent understanding of the mode or state.

In a possible implementation, the response information includes uplink control information UCI, an uplink sequence, an uplink signal, or higher layer signaling.

In this embodiment of this application, a plurality of possible implementations are proposed for the response information, to improve realizability of the solution. In addition, different implementations are applicable to different scenarios, to meet communication requirements in the different scenarios.

In a possible implementation, the first signal may indicate a group of communication apparatuses to switch modes. The first communication apparatus is an apparatus in the group of communication apparatuses.

In this embodiment of this application, the second communication apparatus sends a request to only the first communication apparatus in the group of communication apparatuses. Compared with sending a switching signal to each communication apparatus, signal overheads can be reduced, energy saving of the communication apparatus can be implemented, and communication efficiency can be improved.

In a possible implementation, the second communication apparatus may receive second response information sent by the first communication apparatus.

In this embodiment of this application, the second communication apparatus may receive the second response information sent by the first communication apparatus, to enhance reliability of mode switching. The second communication apparatus and the first communication apparatus have the consistent understanding of the mode or state.

In a possible implementation, after the second communication apparatus receives the second response information from the first communication apparatus, the second communication apparatus may send a mode switching indication to a third communication apparatus, where the third communication apparatus is an apparatus in the group of communication apparatuses. In this embodiment of this application, the second communication apparatus may notify the third communication apparatus in the communication apparatus group of switching a mode. The third communication apparatus may switch the mode after receiving the mode switching indication of the second communication apparatus. That is, modes of the communication apparatus group may be consistent, so that data communication is completed in cooperation, and group communication efficiency is improved.

In a possible implementation, the second response information may be uplink control information UCI, an uplink sequence, an uplink signal, or higher layer signaling.

In this embodiment of this application, the response information and the second response information may be the same or different.

In this embodiment of this application, a plurality of possible implementations are proposed for the second response information, to improve realizability of the solution. In addition, different implementations are applicable to different scenarios, to meet communication requirements in the different scenarios.

A third aspect of embodiments of this application provides a communication apparatus. The apparatus may be used as a first communication apparatus, and the apparatus performs the method according to any one of the first aspect and the implementations of the first aspect.

A fourth aspect of embodiments of this application provides a communication apparatus. The apparatus may be used as a second communication apparatus, and the apparatus performs the method according to any one of the second aspect and the implementations of the second aspect.

A fifth aspect of this application provides a communication apparatus. The apparatus may be used as a first communication apparatus, and the apparatus has a function of implementing the method in the first aspect and the implementations of the first aspect. The apparatus includes a processor and a transmission interface. The transmission interface is configured to receive or send data, and the processor is configured to invoke software instructions stored in a memory, to perform the information transmission method in the first aspect and the implementations of the first aspect.

A sixth aspect of this application provides a communication apparatus. The apparatus may be used as a second communication apparatus, and the apparatus has a function of implementing the method in the second aspect and the implementations of the second aspect. The apparatus includes a processor and a transmission interface. The transmission interface is configured to receive or send data, and the processor is configured to invoke software instructions stored in a memory, to perform the information transmission method in the second aspect and the implementations of the second aspect.

A seventh aspect of this application provides a computer storage medium. The computer storage medium stores instructions, and when the instructions are executed on a computer, the computer is enabled to perform the method in the first aspect or the second aspect, and the implementations of the first aspect or the second aspect.

An eighth aspect of this application provides a computer program product. When the computer program product runs on a computer, the computer is enabled to perform the method in the first aspect or the second aspect, and the implementations of the first aspect or the second aspect.

A ninth aspect of this application further provides a chip system. The chip system includes a processor, and may further include a memory, to implement the method in any one of the first aspect and the possible implementations of the first aspect, and any one of the second aspect and the possible implementations of the second aspect. The chip system may include a chip, or may include a chip and another discrete component.

A tenth aspect of this application further provides a communication apparatus, including an input/output interface and a logic circuit. The input/output interface is configured to input or output a signal or data. The input/output interface is specifically configured to output a first signal. The logic circuit is configured to perform the method in any one of the first aspect and the possible implementations of the first aspect to perform mode switching.

An eleventh aspect of this application further provides a communication apparatus, including an input/output interface and a logic circuit. The input/output interface is configured to input or output a signal or data. The input/output interface is specifically configured to obtain a first signal. The logic circuit is configured to perform the method in any one of the second aspect and the possible implementations of the second aspect to determine a mode of a first communication apparatus.

A twelfth aspect of this application further provides a communication system, including the first communication apparatus and the second communication apparatus in the foregoing aspects.

### BRIEF DESCRIPTION OF DRAWINGS

FIG. 1 is a schematic diagram of a communication system according to an embodiment of this application;
FIG. 2 is a schematic diagram of a network architecture according to an embodiment of this application;
FIG. 3 is a schematic diagram of three states in the conventional technology;
FIG. 4 is a schematic flowchart of establishing a radio resource control RRC connection by a terminal device;
FIG. 5 is a schematic flowchart of random access;
FIG. 6 is a schematic flowchart of a mode switching method according to an embodiment of this application;
FIG. 7 is a schematic diagram of a packet of a terminal device according to an embodiment of this application;
FIG. 8 is a schematic diagram of a mode switching procedure according to an embodiment of this application;
FIG. 9 is another schematic diagram of a mode switching procedure according to an embodiment of this application;
FIG. 10 is another schematic diagram of a mode switching procedure according to an embodiment of this application;
FIG. 11 is another schematic diagram of a mode switching procedure according to an embodiment of this application;
FIG. 12 is a schematic diagram of a structure of a first communication apparatus according to an embodiment of this application;
FIG. 13 is a schematic diagram of a structure of a second communication apparatus according to an embodiment of this application;
FIG. 14 is a schematic diagram of a structure of a terminal device according to an embodiment of this application;
FIG. 15 is a schematic diagram of a structure of an access network device according to an embodiment of this application; and
FIG. 16 is a schematic diagram of a structure of a core network device according to an embodiment of this application.

### DESCRIPTION OF EMBODIMENTS

Embodiments of this application provide a mode switching method, used by a terminal device to switch a mode, so as to reduce a delay in performing mode switching by the terminal device.

The following describes technical solutions in embodiments of this application with reference to accompanying drawings in embodiments of this application. In this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c, where a, b, and c each may be singular or plural. It should be noted that "at least one item (piece)" may also be explained as "one item (piece) or more items (pieces)".

It should be noted that, in this application, words such as "example" or "for example" are used to represent giving an example, an illustration, or a description. Any embodiment or design described as an "example" or "for example" in this application should not be explained as being more preferred or having more advantages than another embodiment or design. Exactly, use of the word such as "example" or "for example" is intended to present a relative concept in a specific manner.

Descriptions such as "first" and "second" in embodiments of this application are merely used for indicating and distinguishing between described objects, do not show a sequence, do not indicate a specific limitation on a quantity of devices in embodiments of this application, and cannot constitute any limitation on embodiments of this application.

The technical solutions provided in embodiments of this application may be applied to various communication systems, for example, a long term evolution (long term evolution, LTE) system, a fifth generation (5th generation, 5G) mobile communication system, a sixth generation (6th generation, 6G) mobile communication system, a wireless-fidelity (wireless-fidelity, Wi-Fi) system, a short-distance communication system, a satellite communication system, a vehicle-to-everything communication system, a non-terrestrial communication system, a future communication system, a system in which a plurality of communication systems are converged, and the like. This is not limited in embodiments of this application. 5G may also be referred to as new radio (new radio, NR).

The technical solutions provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communication (massive machine type communication, mMTC), device-to-device (device-to-device, D2D), vehicle to everything (vehicle to everything, V2X), vehicle to vehicle (vehicle to vehicle, V2V), internet of things (internet of things, loT), virtual reality (Virtual Reality, VR), augmented reality (Augmented Reality, AR), customer-premises equipment (Customer-Premises Equipment, CPE), a sensor, and the like.

Embodiments of this application are applicable to both a homogeneous network scenario and a heterogeneous network scenario, and there is no limitation on transmission points. There may be multi-point coordinated transmission between macro base stations, between micro base stations, and between a macro base station and a micro base station. Embodiments of this application are applicable to a frequency division multiplexing system, a time division multiplexing system, a duplex system, an access backhaul system, and a trunk system. Embodiments of this application are applicable to a low-frequency scenario (sub 6G), and are applicable to a high-frequency scenario (above 6G), terahertz, optical communication, and the like.

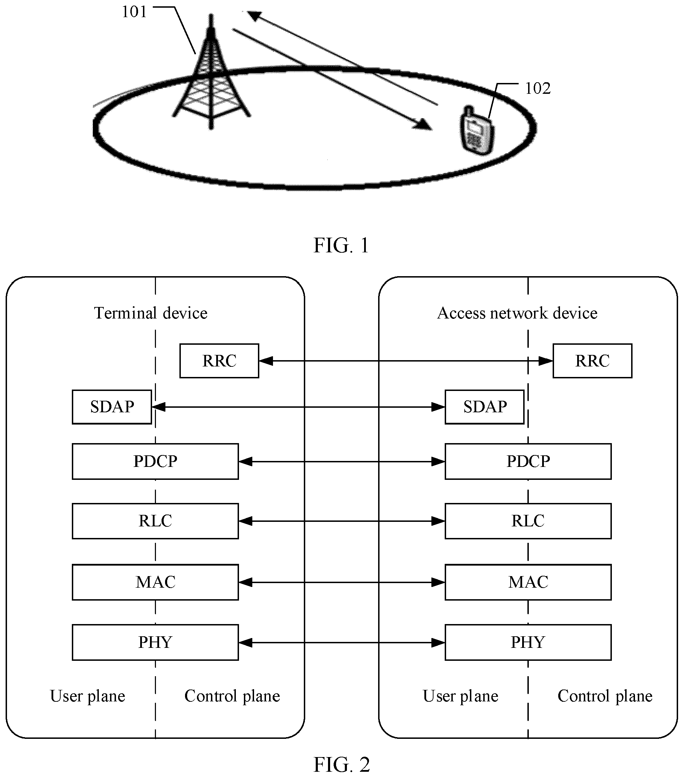

Refer to FIG. 1. A network framework according to an embodiment of this application includes an access network device 101 and a terminal device 102.

The access network device 101 is a radio access network (radio access network, RAN) node (or device) that enables a terminal to access a wireless network, and may also be referred to as a base station. Currently, some examples of the RAN node are: a continuously evolved NodeB (gNB), a transmission reception point (transmission reception point, TRP), an evolved NodeB (evolved NodeB, eNB), a radio network controller (radio network controller, RNC), a home NodeB (for example, home evolved NodeB, or home NodeB, HNB), a wireless fidelity (wireless fidelity, Wi-Fi) access point (access point, AP), a wireless relay node, a wireless backhaul node, a transmission point (TP, transmission point), or a transmission and reception point (TRP, transmission and reception point). The RAN node may alternatively be an ngNB or a transmission point (TRP or TP) in 5G, for example, an NR system, or one antenna panel or a group of antenna panels of a base station in the 5G system. The RAN node may alternatively be a network node that constitutes a gNB or a transmission point, for example, a baseband unit (BBU), a distributed unit (DU, distributed unit), a device that undertakes a function of a base station in device-to-device (Device-to-Device, D2D), vehicle-to-everything (vehicle-to-everything, V2X), or machine-to-machine (machine-to-machine, M2M) communication, or a base station in a future communication system.

In some deployments, the gNB may include a central unit (CU, central unit) and a DU, and the gNB may further include an active antenna unit (AAU, active antenna unit). The CU implements some functions of the gNB, and the DU implements some functions of the gNB. For example, the CU is responsible for processing a non-real-time protocol and service, and implementing functions of a radio resource control (RRC, radio resource control) layer and a packet data convergence protocol (PDCP, packet data convergence protocol) layer. The DU is responsible for processing a physical layer protocol and a real-time service, and implementing functions of a radio link control (RLC, radio link control) layer, a medium access control (MAC, medium access control) layer, and a physical (PHY, physical) layer. The AAU implements some physical layer processing functions, and a function related to radio frequency processing and an active antenna. Information at the RRC layer eventually becomes information at the PHY layer, or is converted from information at the PHY layer. Therefore, in this architecture, higher layer signaling, for example, RRC layer signaling, may also be considered as being sent by the DU or sent by the DU and the AAU. It may be understood that a network device may be a device including one or more of a CU node, a DU node, and an AAU node. In addition, the CU may be classified into a network device in an access network (RAN, radio access network), or the CU may be classified into a network device in a core network (CN, core network). This is not limited in this application.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to the cell (small cell). The cell herein may include a metro cell (metro cell), a micro cell (micro cell), a pico cell (pico cell), a femto cell (femto cell), and the like. These cells have characteristics of small coverage and low transmit power, and are applicable to providing a high-rate data transmission service.

The terminal device 102 is also be referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device that has a wireless connection function. The terminal device may also be referred to as a terminal for short. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a sensor, a cellular phone, a cordless phone, a session initiation protocol (SIP, session initiation protocol) telephone, a wireless local loop (WLL, wireless local loop) station, a personal digital assistant (PDA, personal digital assistant), a handheld device having a wireless communication function, a computing device or another processing device connected to a wireless modem, a vehicle-mounted device, a wearable device, a terminal device in a 5G network, or a terminal device in a future evolved public land mobile communication network (PLMN, public land mobile network).

The wearable device may also be referred to as a wearable intelligent device, and is a general term of wearable devices, such as glasses, gloves, watches, clothes, and shoes, that are developed and intelligently designed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-function and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device may alternatively be a terminal device in an internet of things (IoT, internet of things) system. The IoT is an important part in future development of information technologies. A main technical feature of the IoT is to connect things to a network by using a communication technology, to implement an intelligent network for human-machine interconnection and thing-thing interconnection. An IoT technology can be used to implement massive connections, deep coverage, and power saving for terminals by using, for example, a narrowband (NB, narrowband) technology.

In addition, the terminal device may further include sensors such as an intelligent printer, a train detector, and a gas station, and main functions include: collecting data, receiving control information and downlink data of a network device, sending an electromagnetic wave, and transmitting uplink data to the network device.

FIG. 2 is a schematic diagram of a network architecture according to an embodiment of this application. The network architecture may include a physical layer (physical layer, PHY), a medium access control (medium access control, MAC) layer, a radio link control (radio link control, RLC) layer, a packet data convergence protocol (packet data convergence protocol, PDCP) layer, and a radio resource control (radio resource control, RRC) layer.

A terminal may include a user plane (user plane) protocol and a control plane (control plane) protocol, and a base station may include a user plane (user plane) protocol and a control plane (control plane) protocol. Layers of the terminal and the base station may be connected to each other to transmit information.

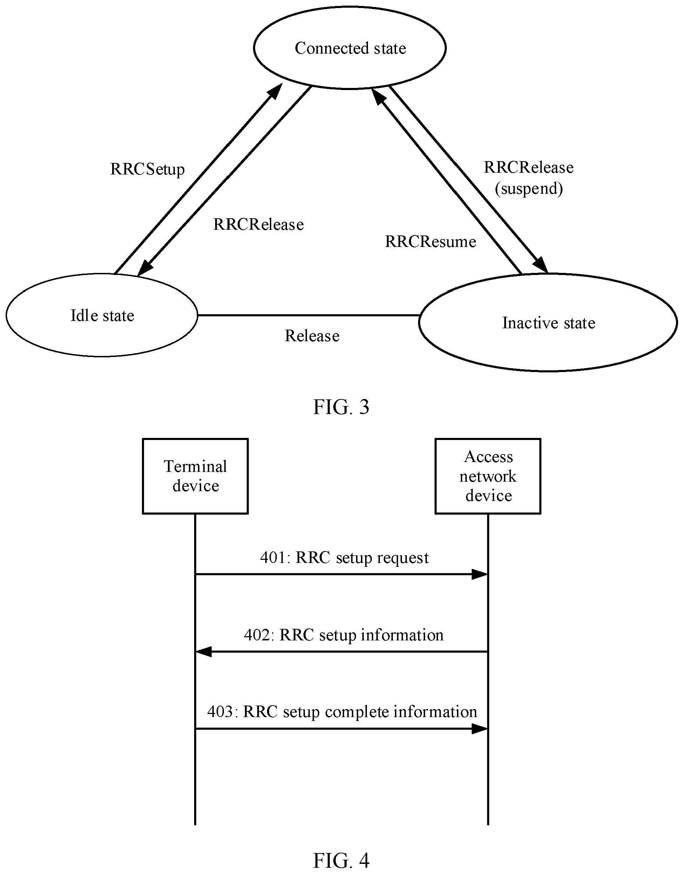

Refer to FIG. 3. An NR system defines three states, which are an idle (idle) state, an inactive (inactive) state, and a connected (connected) state, and a terminal device is in only one state at a moment.

A terminal device in the idle (IDLE) state cannot receive or send data. The terminal device needs to enter the inactive state or the connected state to receive or send data. When a terminal device is in the inactive state, only small packet data can be received or sent. With evolution and development of technologies, the terminal device may receive or send small packet data in the inactive state. When the terminal device is in the inactive state, an access network device may send RRC configuration to the terminal device. For example, the RRC configuration may include terminal device capability reporting, a configured grant (configured grant), and the like. Alternatively, a random access channel (RACH, random access channel) may be configured to perform uplink synchronization and uplink data transmission.

FIG. 4 is a schematic flowchart of establishing an RRC connection by a terminal device, including three higher layer signaling interaction steps: 401: The terminal device sends an RRC setup request (RRC Setup Request) to an access network device. 402: The access network device replies to the terminal with RRC setup (RRC Setup) information. 403: The terminal device sends RRC setup complete (RRC Setup Complete) information to the access network device.

In an NR system, if the terminal device is currently in an idle state, when the terminal device wants to switch from the idle state to a connected state, the terminal device needs to establish an RRC connection, in other words, perform the foregoing RRC connection establishment process.

Refer to FIG. 2. RRC signaling, MAC signaling, RLC signaling, and the like are all higher layer signaling, and the others are physical layer (physical layer, PHY) signaling.

The physical layer signaling may also be referred to as low layer signaling.

The higher layer signaling in this application may be RRC signaling, MAC signaling, RLC signaling, or the like. The physical layer signaling may be DCI, data carried on a physical layer channel, or the like.

The RRC signaling is higher layer signaling. Sending and receiving of each piece of RRC signaling may require scheduling at a physical layer, for example, receiving and/or sending of the DCI and receiving and/or sending of a data channel. As a result, a transmission delay of the higher layer signaling is long, for example, tens of milliseconds (ms) to hundreds of ms.

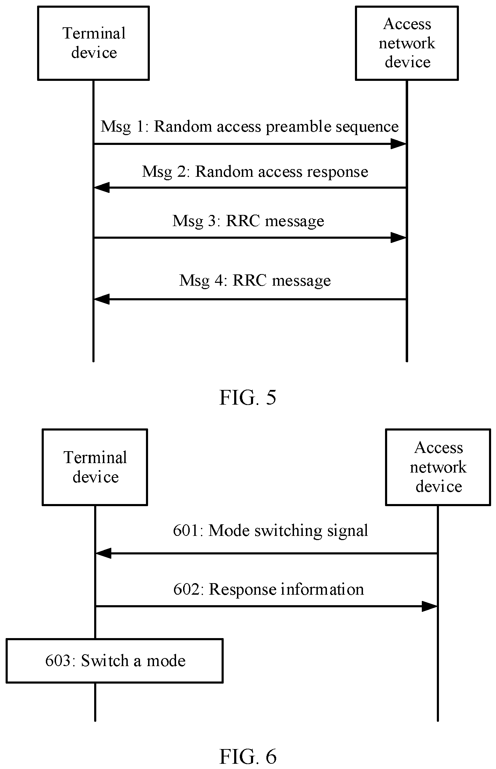

Refer to FIG. 5. In some cases, for example, when a terminal device switches from an idle state to an inactive state or a connected state, if the terminal device exceeds an effective range of a timing advance, or the terminal device enters an RRC connected state for the first time, the terminal device needs to initiate random access, in other words, perform a random access procedure. Specifically, the random access procedure may include the following four steps. For example, step 1: The terminal device sends a random access preamble (preamble) sequence, which may also be referred to as that the terminal device sends a message 1 (message 1, Msg 1). Step 2: An access network device feeds back a random access response, which may also be referred to as that the access network device sends a message 2 (message 2, Msg 2). The random access response may carry the timing advance. If the preamble (preamble) sequence is not dedicated to the terminal device, step 3: the terminal device needs to send a message 3 (message 3, Msg 3), where the message 3 may be an RRC message (RRC signaling), and step 4: the access network device sends a message 4 (message 4, Msg 4) are performed. Further, the message 4 may carry a terminal device identifier, to perform contention resolution. That is, the terminal device can enter the connected state only after four steps of random access are completed, and a delay is long.

In embodiments of this application, a first communication apparatus may be a terminal device, an access network device, or another communication device; and a second communication apparatus may be a terminal device, an access network device, or another communication device. In the following embodiments, an example in which the first communication apparatus is a terminal device and the second communication apparatus is an access network device is used for description.

To resolve the long delay problem, an embodiment of this application provides a mode switching method. This embodiment of this application may be used as an independent embodiment, or may be combined with another embodiment of this application. This is not specifically limited in this application. FIG. 6 is a schematic flowchart of a mode switching method according to an embodiment of this application. The method includes the following steps.

601: An access network device sends a mode switching signal to a terminal device.

The mode switching signal is used by the access network device to indicate the terminal device to switch a mode, for example, indicate that the mode of the terminal device changes. The mode may include a first mode and a second mode.

In a possible implementation, a mode switching request signal may be used by the terminal device to request to switch from the first mode to the second mode. For example, the mode switching request signal may also be used by the terminal device to request to send data, to request to enter an enhanced state, or to request to switch from a default energy saving mode to a data transmission mode.

In a possible implementation, the mode switching request signal may be used by the terminal device to request to switch from the second mode to the first mode. For example, the mode switching request signal may also be used by the terminal device to request to enter the energy saving state, to request to stop sending data, or to request to switch from the data transmission mode to the default energy saving mode.

Optionally, the mode switching signal may also be used by the access network device to indicate the terminal device to send the data, or to indicate the terminal device to enter the energy saving state. Alternatively, the mode switching signal indicates the terminal device to switch from the default energy saving mode to the data transmission mode, or indicates the terminal device to switch from the first mode to the second mode.

The mode switching signal or a state switching request signal may also be referred to as a switching signal for short. A state switching signal may also be referred to as a state signal for short.

The mode switching signal or the state switching signal may also be referred to as a first signal or the like for short. A specific signal name is not limited in this embodiment of this application.

The mode in this embodiment of this application may also be a state, and the terminal device has two modes (or states). To be specific, the terminal device in this embodiment of this application has two modes in one state, two states, or two modes. Compared with three states, the terminal device and/or the access network device may reduce signaling overheads of mode switching, reduce complexity of switching, and reduce a switching delay.

The two modes in one state may mean that the terminal device may have two modes in a first state. For example, the terminal device has only one state, that is, the first state. The first state may include a first state of the energy saving mode and a first state of an enhanced mode. Alternatively, the first state may include a first state of non-data transmission and a first state of data transmission. Alternatively, the first state may include a first state of small packet data transmission and a first state of large packet data transmission.

The first state may have one or more functions of an idle state and/or an inactive state, and/or a connected state in an NR system.

For example, the two modes in one state may mean that the terminal device may have two modes in a connected state. For example, the terminal device has only one state, that is, the connected state. The connected state may include a connected state of the energy saving mode and a connected state of the enhanced mode. Alternatively, the connected state may include a connected state of non-data transmission and a connected state of data transmission. Alternatively, the connected state may include a connected state of small packet data transmission and a connected state of large packet data transmission.

For example, the two modes in one state may mean that the terminal device may have two modes in an inactive state. For example, the terminal device has only one state, that is, the inactive state. The inactive state may include an inactive state of the energy saving mode and an inactive state of the enhanced mode. Alternatively, the connected state may include an inactive state of non-data transmission and an inactive state of data transmission.

In this embodiment, the two modes in one state or the two modes are used as an example for description. It may be understood that when the terminal device has two states, the mode switching signal may be a state switching request, and other related signaling in this embodiment may be converted in a similar manner. Details are not described herein again.

Mode switching or state switching may also refer to sent signal mode switching or sent signal state switching, or received signal mode switching or received signal state switching, or switching from the energy saving mode to a high-efficiency data transmission mode, or switching from the high-efficiency data transmission mode to the energy saving mode. In this embodiment of this application, switching may also be referred to as conversion. This is not specifically limited.

Optionally, in this embodiment of this application, switching may also be referred to as conversion, and meanings may be the same.

The mode switching signal in this application may alternatively be represented by first information, the first signal, or the like. The signal indicates the terminal device to switch the mode.

A scenario in this application may be a mode or state switching method triggered by a first access network device for downlink data or when the access network device has a requirement for the terminal device to receive data, or may be a mode or state switching method triggered by the first access network device for uplink data or when the terminal device has a data sending request.

The two modes in this embodiment may be an idle mode and a connected mode, a data transmission mode and a non-data transmission mode, a small packet transmission mode and a large packet transmission mode, or may be the energy saving mode and a high-efficiency transmission mode. It may be understood that the two modes may alternatively be another expression. In this embodiment, the first mode and the second mode are used as an example for description. The first mode is the idle mode/the energy saving mode, and the second mode is the connected mode/the high-efficiency transmission mode.

Optionally, the mode or state in this embodiment of this application may be an RRC state, or may be a state of the terminal device. This is not specifically limited herein. The state of the terminal device may be one or more of a data transmission state, an energy saving state, a power consumption state, or a capability state.

Optionally, the first mode may be the non-data transmission mode, and the second mode may be the data transmission mode.

Optionally, the first mode may be the small data packet transmission mode, and the second mode may be the large data packet transmission mode. A small packet and a large packet may be defined based on a data volume. If a data packet that transmits information is less than a preset bit threshold, the data packet is in the small packet mode. If a data packet that transmits information is not less than the preset bit threshold, the data packet is in the large packet transmission mode. The preset bit threshold may be 30 bits, 50 bits, 100 bits, or the like. A specific value is not limited herein. For example, data whose data volume is less than 100 bits is small packet data. 100 is merely an example, and another value may alternatively be used. This is not limited herein.

Optionally, the first mode may be a default mode, and the second mode may be the enhanced mode.

Optionally, the first mode may be the default energy saving mode, and the second mode may be an enhanced communication mode.

Optionally, the first mode may be a connected state of the default energy saving mode, and the second mode may be a connected state of the enhanced communication mode.

Alternatively, the mode or the state may be another example. This is not specifically limited in this application.

Optionally, when a first communication apparatus is under a specific service type, the first communication apparatus communicates with a second communication apparatus. The first communication apparatus may communicate different content in different modes. To better adapt to communication in different communication content, the first communication apparatus may switch a mode.

Optionally, under different service types, standards for determining that the first communication apparatus is in the first mode or the second mode may be different, and the first communication apparatus may communicate different content under the different service types. To better adapt to communication of communication content under the different service types, the first communication apparatus may switch the mode. For example, when a first communication device switches a service type, the second communication apparatus may send a mode switching signal to the first communication apparatus, to notify the first communication apparatus of switching the mode.

For example, the first communication device may include two service types. For example, when the service type of the first communication device is changed from an eMBB type to a URLLC type, the second communication apparatus may send a mode switching signal to the first communication apparatus. For example, when the service type of the first communication device is changed from the URLLC type to a V2X type, the second communication apparatus may send a mode switching signal to the first communication apparatus. For example, when the service type of the first communication device is changed from the eMBB type to the V2X type, the second communication apparatus may send a mode switching signal to the first communication apparatus.

The mode switching signal is physical layer signaling, and has a lower transmission delay compared with higher layer signaling.

In this embodiment, implementing mode or state switching by using the physical layer signaling can reduce signaling overheads, reduce a switching delay, and implement energy saving.

The service type of the first communication apparatus may be defined in a plurality of manners, and may be defined based on a size of a data packet, a delay reliability requirement of data transmission, mobility, a transmission delay requirement, a channel environment, a reliability requirement, a coverage requirement, and a communication scenario when the first communication apparatus and the second communication apparatus perform data transmission. This is not specifically limited herein.

In a communication system, mainstream service types may include a plurality of types, for example, one or more of a terminal of an enhanced mobile broadband service type, a terminal of a narrowband internet of things service type, a terminal of an ultra-reliable low-latency communication service type, a terminal of a customer-premises equipment type, a terminal of an augmented reality service type, a terminal of a virtual reality service type, and a vehicle-to-everything terminal.

For example, an eMBB service is mainly characterized by big data and occasionally small data. Generally, a user (or a terminal) is moving and requirements for a delay and reliability are not high. Both uplink and downlink data transmission exist. A channel environment is complex and changeable, for example, outdoors and indoors.

For example, a URLLC service is mainly characterized by small data. A terminal is generally non-mobile or has a fixed route, for example, a factory scenario. Requirements for a delay and reliability are high, and a channel environment is stable.

For example, an IoT service is generally characterized by small data. The data may exist periodically. A terminal device is non-mobile or mobile at high speed, for example, a smart water meter. Uplink data transmission is mainly performed, and a channel environment is stable.

For example, a CPE service is generally characterized by big data. A terminal device is fixed and non-mobile. Short-distance communication can be realized. Requirements for a delay and reliability are not high, and a channel environment is stable.

With reference to the three existing states (the idle (idle) state, the inactive (inactive) state, and the connected (connected) state), in this embodiment of this application, a mode may be defined based on a service type of the terminal device. An example is described below.

The following embodiment provides a mode design method. The mode may be defined based on the service type of the terminal device, to implement mode customization, and implement energy saving of the terminal device and improve communication efficiency while meeting a communication requirement of each service type of the terminal device. This embodiment of this application may be used as an independent embodiment, or may be combined with another embodiment of this application. This is not specifically limited in this application.

In a possible implementation, the mode is defined based on the service type of the terminal device. This embodiment of this application may be used as an independent embodiment, or may be combined with another embodiment of this application. This is not specifically limited in this application.

Optionally, there is a correspondence between the service type of the terminal device and the mode. The terminal device and/or the access network device may determine the mode based on the correspondence.

The following are specific examples of the correspondence between the mode and the service type:
1. The terminal device is a terminal device of an internet of things IoT service.

The first mode of the terminal device is the idle state, and the second mode is the inactive state or the connected state.

The IoT terminal device may have characteristics such as wide coverage, a large quantity of connections, a low rate, low costs, low power consumption, and an excellent architecture, for example, massive connections, lower power consumption, and lower chip costs. The IoT terminal may be a smart water meter, smart parking, smart pet tracking, smart bicycle, smart smoke detector, smart toilet, smart vending machine, or the like.

According to the foregoing design, when the terminal device of the IoT type implements small packet data transmission, energy can be saved as much as possible, and communication efficiency can be improved. In addition, a service of the terminal device of this type is regular. The terminal device is in the idle state when there is no data according to the rule, to save energy to a maximum extent. The terminal device switches to the inactive state or the connected state when there is data, to complete data transmission, reduce a switching delay, avoid frequent switching, and improve communication efficiency.

For example, an IoT service may include a narrowband internet of things (narrowband internet of things, NB-IoT) service, a machine type communication (machine type communication, MTC) service, or another internet of things service.

An MTC terminal is characterized by low costs and enhanced coverage. An MTC service may include a massive internet of things (massive MTC, mMTC) service. The MTC terminal can be used in various scenarios and applications: industrial application and control, traffic safety and control, remote manufacturing, remote training, remote surgery, and the like.

2. The terminal device is a terminal device of an enhanced mobile broadband (enhanced mobile broadband, eMBB) service.

The first mode of the terminal device is the idle state or the inactive state, and the second mode is the connected state.

eMBB is a scenario in which performance such as user experience is further improved based on an existing mobile broadband service scenario, and is also an application scenario that is closest to a daily life of a user. In the eMBB scenario, a network speed is greatly improved. For example, even when a 4K high-definition video is watched, a peak rate can reach 10 gigabits per second Gbps.

According to the foregoing design, when the terminal device of the eMBB type implements data transmission, energy can be saved as much as possible, and communication efficiency can be improved. In addition, a service of the terminal device of this type is regular. The terminal device may be in the inactive state when no data is transmitted or small packet data is transmitted according to the rule, to save energy to a maximum extent. The terminal device may switch to the connected state when large packet data is transmitted, to complete data transmission, reduce a switching delay, avoid frequent switching, and improve communication efficiency.

3. The terminal device is a terminal device of an ultra-reliable low-latency communication (ultra-reliable and low-latency communication, URLLC) service.

The first mode of the terminal device is the idle state, and the second mode is the inactive state.

Alternatively, the first mode of the terminal device is the inactive state, and the second mode is the connected state.

The URLLC terminal is characterized by high reliability, a low latency, and high availability. The URLLC terminal is used in various scenarios and applications: industrial application and control, traffic safety and control, remote manufacturing, remote training, remote surgery, and the like. URLLC has great potential in a self-driving service, and is also important for a security industry. The URLLC terminal may be a terminal device that requires a low-latency and highly-reliable connection, for example, self-driving and industrial automation.

The MTC terminal is characterized by low costs and enhanced coverage. The MTC terminal may include a massive internet of things (massive MTC, mMTC) service. The MTC terminal can be used in various scenarios and applications: industrial application and control, traffic safety and control, remote manufacturing, remote training, remote surgery, and the like.

According to the foregoing design, when the terminal device of the URLLC type implements data transmission, energy can be saved as much as possible, and communication efficiency can be improved. In addition, a service of the terminal device of this type is regular. The terminal device may be in the idle state when no data is transmitted according to the rule, to save energy to a maximum extent. The terminal device may switch to the inactive state when small packet data is transmitted, to complete data transmission, reduce a switching delay, avoid frequent switching, and improve communication efficiency. Alternatively, when services are frequent, the terminal device may be in the inactive state when small packet data is transmitted, to save energy to a maximum extent, and the terminal device may switch to the connected state when large packet data is transmitted, to complete data transmission, reduce a switching delay, avoid frequent switching, and improve communication efficiency. Specifically, the two modes may be properly configured based on a service status of the terminal of this type, to implement service transmission, reduce energy consumption, and improve communication efficiency.

4. The terminal device is a terminal of a customer-premises equipment (customer-premises equipment, CPE) type, a terminal of an augmented reality (augmented reality, AR) type, a terminal of a virtual reality (virtual reality, VR) type, or a vehicle-to-everything (vehicle-to-everything, V2X) terminal.

The first mode of the terminal device is a first connected state, and the second mode is a second connected state.

The first connected state is a low-power-consumption connected state, and the terminal device can save energy to a maximum extent. The terminal device may switch to the second connected state when large packet data is transmitted, where the connected state is a high-rate connected state.

Alternatively, the first connected state may be a low-power-consumption connected state, a low-rate connected state, or the like, and the second connected state may be a high-power connected state, a high-rate connected state, or the like. This is not specifically limited herein.

CPE may be a mobile signal access device that receives a mobile signal and forwards the mobile signal in a form of a wireless Wi-Fi signal. The CPE is also a device that converts a high-speed 4G or 5G signal into a Wi-Fi signal, and can support a large quantity of mobile terminals to simultaneously access the internet. The CPE can be widely used for wireless network access in rural areas, towns, hospitals, organizations, factories, and cells, reducing costs of wired network deployment.

The V2X is a key technology of an intelligent transportation system. The V2X implements communication between a vehicle and a vehicle, between a vehicle and a base station, and between a base station and a base station. In this way, a series of traffic information such as a real-time road condition, road information, and pedestrian information can be obtained. This improves driving safety, reduces congestion, improves traffic efficiency, provides in-vehicle infotainment information, and the like.

According to the foregoing design, when the terminal device of this type implements data transmission, energy can be saved as much as possible, and communication efficiency can be improved. In addition, a service of the terminal device of this type is regular, and data is frequent. The terminal device may be in the first connected state when no data is transmitted or small packet data is transmitted according to the rule. The connected state is a low-power-consumption connected state and can save energy to a maximum extent. The terminal device may switch to the second connected state when large packet data is transmitted. The connected state is a high-rate connected state, so that data transmission can be quickly completed, a switching delay can be reduced, frequent switching can be avoided, and communication efficiency can be improved.

The service type of the terminal device may include but is not limited to one or more of the following: eMBB, URLLC, MTC, IoT, CPE, AV, VR, V2X, and the like.

The service type of the terminal device may also be referred to as a terminal type.

In the foregoing embodiment, the first mode is the idle state, the inactive state, or the connected state, and the second mode is the idle state, the inactive state, or the connected state, which is merely an example. Specifically, names of the first mode and/or the second mode may not be limited to the idle state, the inactive state, or the connected state. This is not specifically limited in this application.

That is, different first modes or first states and/or different second modes or second states may be defined for different service types or terminal types.

Each mode or state may have its own function or operation to be performed. The function or operation may be at least one of functions of the idle state, functions of the inactive state, or functions of the connected state included in the conventional technology.

Optionally, the first mode or the second mode may have one or more of the following functions of the idle state, the inactive state, or the connected state.

The foregoing describes division into modes of terminal devices of different service types. Functions of the three states (the idle state, the inactive state, and the connected state) are described as follows:

### 1. The idle state:

The terminal device may receive system information, a paging message (paging information), and cell (re-) selection (cell (re-) selection). To be specific, the terminal device may maintain only a basic link to a network, but no RRC link is established between the terminal device and the access network device. When the terminal device is in the idle state, a specific function includes one or more of the following:
(A) The terminal device may receive terminal device-level discontinuous reception (discontinuous reception, DRX) configured by an upper layer (upper layer) device, for example, the access network device.
(B) The terminal device performs mobility control based on network configuration.
(C) The terminal device may detect a short message, where the short message is a message scheduled and transmitted by using DCI scrambled by a paging radio network temporary identifier (paging radio network temporary identifier, P-RNTI).
(D) The terminal device may detect a paging channel (paging channel), for example, core network paging performed by using a 5G S-temporary mobile subscription identifier (5G S-temporary mobile subscription identifier, 5G-S-TMSI).
(E) The terminal device may perform neighboring cell measurement and cell (re-)selection.
(F) The terminal device may obtain the system information and transmit a system information request.
(G) The terminal device performs logging (logging) of possible measurement and logging of a position and time of the logged measurement configured for the terminal device.

### 2. The inactive state:

The terminal device may receive system information, a paging message (paging information), and cell (re-) selection (cell (re-)selection), and may store a context (context) of the terminal device. To be specific, the terminal device may maintain a basic link to a network. However, the terminal device cannot transmit and/or receive a large amount of data. When the terminal device is in the inactive state, a specific function includes one or more of the following:
(A) The terminal device may receive terminal device-level discontinuous reception (discontinuous reception, DRX) configured by an upper layer device.
(B) The terminal device performs mobility control based on network configuration.
(C) The terminal device may store an access stratum (access stratum) context (context) when the terminal device is in the inactive state.
(D) The terminal device receives a message in a RAN notification area configured at an RRC layer.
(E) The terminal device may detect a short message, where the short message is a message that is scheduled and transmitted by using DCI scrambled by a P-RNTI.
(F) The terminal device may detect a paging channel, for example, core network paging performed by using a 5G-S-TMSI, and RAN paging performed by using a full inactive-radio network temporary identifier (full inactive-radio network temporary identifier, full I-RNTI).
(G) The terminal device may perform neighboring cell measurement and cell (re-)selection.
(H) When the terminal device moves outside a configured RAN-based notification area, the terminal device performs a periodic RAN-based notification area update.
(I) The terminal device may obtain the system information and transmit a system information request.
(G) The terminal device performs logging (logging) of possible measurement and logging of a position and time of the logged measurement configured for the terminal device.

### 3. The connected state:

There is an RRC link between the terminal device and the access network device, and the terminal device may transmit and/or receive data. When the terminal device is in the connected state, a specific function includes one or more of the following:
(A) The terminal device stores an access stratum (Access Stratum) context (context).
(B) The terminal device receives and/or transmits unicast data.
(C) The terminal device may receive terminal device-level DRX configured by a lower layer (lower layer) device, for example, a terminal device.
(D) A terminal device that supports carrier aggregation (carrier aggregation, CA) may receive data transmission of one or more secondary cells aggregated by a primary cell, to enhance bandwidth.
(E) For a terminal device that supports dual connectivity (dual connectivity, DC), a primary cell group aggregates a secondary cell group to enhance bandwidth.
(F) The terminal device performs mobility management of network control.
(G) The terminal device may detect a short message, where the short message may be a message that is scheduled and transmitted by using DCI scrambled by a P-RNTI.
(H) The terminal device may detect a control channel and an associated shared data channel.
(I) The terminal device may provide channel quality and feedback information.
(G) The terminal device may perform neighboring cell measurement and measurement reporting.
(K) The terminal device may obtain system information.

Optionally, to implement fast mode switching, the terminal device and/or the access network device may store/maintain two RRC configurations. For example, the RRC configurations include an RRC configuration of the first mode and an RRC configuration of the second mode.

In a possible implementation, when the terminal device receives the RRC configuration of the first mode sent by the access network device, the terminal device stores/maintains the RRC configuration of the first mode. When the terminal device switches from the first mode to the second mode for the first time, the access network device may send the RRC configuration of the second mode to the terminal device. In this case, the terminal device stores/maintains the RRC configuration of the first mode and the RRC configuration of the second mode. After the terminal device switches from the second mode to the first mode, the terminal device in the first mode may store/maintain the RRC configuration of the first mode and the RRC configuration of the second mode. Alternatively, after the terminal device switches from the first mode to the second mode, the terminal device in the second mode may store/maintain the RRC configuration of the first mode and the RRC configuration of the second mode.

According to the foregoing design, when the terminal device switches from the first mode to the second mode, or when the terminal device switches from the second mode to the first mode, only one piece of mode switching indication information or mode switching information is required, and the access network device does not need to resend the RRC configuration. The terminal device can complete mode switching without receiving the RRC configuration, thereby reducing signaling overheads and a delay of mode switching, and improving communication efficiency.

In a possible implementation, when the terminal device is in the first mode, the access network device may send the RRC configuration of the first mode and the RRC configuration of the second mode to the terminal device, and the terminal device stores/maintains the RRC configuration of the first mode and the RRC configuration of the second mode. Alternatively, when the terminal device is in the second mode, the access network device may send the RRC configuration of the first mode and the RRC configuration of the second mode to the terminal device, and the terminal device stores/maintains the RRC configuration of the first mode and the RRC configuration of the second mode.

According to the foregoing design, when the terminal device switches from the first mode to the second mode, or when the terminal device switches from the second mode to the first mode, only one piece of mode switching indication information or mode switching information is required, and the access network device does not need to resend the RRC configuration. The terminal device can complete mode switching without receiving the RRC configuration, thereby reducing signaling overheads and a delay of mode switching, and improving communication efficiency.

Optionally, there is the correspondence between the mode and the service type of the first communication apparatus. This embodiment of this application may be used as an independent embodiment, or may be combined with another embodiment of this application. This is not specifically limited in this application.

The correspondence or a mapping relationship is predefined in a protocol, or may be configured by the access network device or a core network device for the terminal device by using signaling. This is not specifically limited herein.

Table 1 is an example of a correspondence between a terminal type and modes. At least one row or at least one column in the table may be used as a correspondence, and Table 1 uses a row as an example.

**Table 1**

| Terminal type | First mode | Second mode |
|---|---|---|
| Terminal type 1 | Mode 11 | Mode 12 |
| Terminal type 2 | Mode 21 | Mode 22 |
| ... | ... | ... |
| Terminal type m | Mode m1 | Mode m2 |

| | | |
|---|---|---|
| m is a positive integer. The terminal type 1 to the terminal type m may be at least one of the following: a terminal of an eMBB service type, a terminal of a URLLC service type, a terminal of an IoT service type, a terminal of a CPE service type, a terminal of a V2X service type, a terminal of an AR/VR service type, and the like. | | |

The mode 11 to the mode m1, and the mode 12 to the mode m2 may be one or more of the modes or states described in this application, or may not be limited to the modes or states described in this application.

The following is an example of the correspondence:

When the service type of the first communication apparatus is the enhanced mobile broadband eMBB type, the first mode includes the idle state and/or the inactive state and may have one or more functions of the idle state and/or the inactive state in the NR system, and the second mode includes the connected state and may have one or more functions of the connected state in the NR system;
when the service type of the first communication apparatus is the narrowband internet of things IoT type, the first mode includes the idle state and may have one or more functions of the idle state in the NR system, and the second mode includes the inactive state and/or the connected state and may have one or more functions of the inactive state and/or the connected state in the NR system;
when the service type of the first communication apparatus is the ultra-reliable low-latency communication URLLC type, the first mode includes the idle state and/or the inactive state and may have one or more functions of the idle state and/or the inactive state in the NR system, and the second mode includes the connected state and may have one or more functions of the connected state in the NR system; and/or
when the service type of the first communication apparatus is a CPE type, the first mode includes the first connected state and may have one or more functions of the connected state in the NR system, and the second mode includes the second connected state and may have one or more functions of the connected state in the NR system.

For example, for the terminal device of the IoT type, the first mode or the first state may be the idle state, and the second mode or the second state may be the inactive state or the connected state. For example, the first mode or the first state does not have a data sending and receiving function, and a paging (paging) message scheduled by using the downlink control information scrambled by the P-RNTI may be received.

For example, for the terminal device of the eMBB type, the first mode or the first state may be the inactive state, and the second mode or the second state may be the connected state. For example, the first mode or the first state has a data sending and receiving function. Downlink control information scrambled by a cell radio network temporary identifier (cell radio network temporary identifier, C-RNTI) may be received, and data may be sent and received.

For example, for the terminal device of the URLLC type, the first mode or the first state may be the idle state, and the second mode or the second state may be the inactive state. For example, the second mode or the second state has a data sending and receiving function. Downlink control information scrambled by a C-RNTI may be received, and data may be sent and received.

For example, for the terminal device of the CPE type, the first mode or the first state may be the first connected state, and the second mode or the second state may be the second connected state. For example, the first mode or the first state has a data sending and receiving function. Downlink control information scrambled by a C-RNTI may be received, and data may be sent and received.

According to the foregoing design, different two modes in one state or two states may be defined for different terminal types. Compared with the existing three states, signaling overheads of mode switching can be reduced, function customization of the mode or state is implemented, and energy saving of the communication device is implemented on demand.

The first mode or the second mode may be one or more of the idle state, the inactive state, and the connected state, or may be any one of the data transmission mode, the non-data transmission mode, a high efficiency mode, the energy saving mode, the small packet transmission mode, the large packet transmission mode, the energy saving mode, the high-efficiency transmission mode, or the like. The first mode or the second mode may implement one or more of functions of the idle state, the inactive state, and the connected state.

In this embodiment of this application, a specific signal form of the mode switching signal is not limited. For example, the mode switching signal may be downlink control information (downlink control information, DCI) or a paging message (paging information), or may be other information, for example, information carried on a physical downlink shared channel (physical downlink shared channel, PDSCH). It may be understood that a specific mode switching signal is selected based on an actual application. This is not specifically limited herein in this embodiment of this application.

The mode switching signal is a downlink signal or a downlink sequence. Alternatively, the mode switching signal is a signal sent by the access network device.

The following separately describes different signal forms. Specifically, the mode switching request signal may be one or more of the following forms or manners:
Manner 1: The mode switching request signal may be the DCI. The following separately describes different DCI.

(1.1) The DCI scrambled by the cell radio network temporary identifier (cell radio network temporary identifier, C-RNTI) includes the mode switching signal:
For example, if the C-RNTI has been allocated to the terminal device in the first mode, the terminal device may detect the DCI scrambled by the C-RNTI. The DCI scrambled by the C-RNTI includes the mode switching signal.

For example, 1 bit (bit) in the DCI indicates the mode switching signal, where the mode switching signal may also be referred to as mode information, switching information, or the like. This is not specifically limited herein. For example, 0 indicates the first mode (mode 1), and 1 indicates the second mode (mode 2). It may be understood that there is another representation method. For example, 1 indicates the first mode, and 0 indicates the second mode. This is not specifically limited herein.

All modes (modes) and states (states) in this embodiment of this application may be replaced. Details are not described herein again.

For example, when 1 bit in the DCI indicates the state switching signal, the state switching information may also be referred to as state switching information, state information, or the like. This is not specifically limited herein. For example, 0 indicates the first state (state 1), and 1 indicates the second state (state 2). It may be understood that there is another representation method. For example, 1 indicates the first state, and 0 indicates the second state. This is not specifically limited herein.

In this embodiment of this application, 1 bit may alternatively refer to M bits, where M is a positive integer greater than or equal to 1, for example, 2 bits. This is not specifically limited in this application.

A size of a quantity of bits may depend on a quantity of modes or states. For example, the quantity of bits is equal to log2 (the quantity of modes or states) rounded up.

(1.2) The DCI scrambled by the paging radio network temporary identifier (paging radio network temporary identifier, P-RNTI) includes the mode switching signal.

For example, if the P-RNTI has been allocated to the terminal device in the first mode, the terminal device may detect the DCI scrambled by the P-RNTI. The DCI scrambled by the P-RNTI includes the mode switching signal.

The P-RNTI may alternatively be the 5G s-temporary mobile subscription identifier (5G s-temporary mobile subscription identifier, 5G-S-TMSI), the full inactive-radio network temporary identifier (full inactive-radio network temporary identifier, full I-RNTI), or the like.

For example, 1 bit (bit) in the DCI indicates the mode switching signal, where the mode switching signal may also be referred to as mode information, switching information, or the like. This is not specifically limited herein. For example, 0 indicates the first mode (mode 1), and 1 indicates the second mode (mode 2). It may be understood that there is another representation method. For example, 1 indicates the first mode, and 0 indicates the second mode. This is not specifically limited herein.

All modes (modes) and states (states) in this embodiment of this application may be replaced. Details are not described herein again.

For example, when 1 bit in the DCI indicates the state switching signal, the state switching information may also be referred to as state switching information, state information, or the like. This is not specifically limited herein. For example, 0 indicates the first state (state 1), and 1 indicates the second state (state 2). It may be understood that there is another representation method. For example, 1 indicates the first state, and 0 indicates the second state. This is not specifically limited herein.

In this embodiment of this application, 1 bit may alternatively refer to M bits, where M is a positive integer greater than or equal to 1, for example, 2 bits. This is not specifically limited in this application.

A size of a quantity of bits may depend on a quantity of modes or states. For example, the quantity of bits is equal to log2 (the quantity of modes or states) rounded up.

(1.3) DCI scrambled by a mode transitions radio network temporary identifier (mode transitions radio network temporary identifier, MT-RNTI) includes the mode switching signal.

The MT-RNTI may alternatively be a state transitions radio network temporary identifier (state transitions radio network temporary identifier, ST-RNTI).

The access network device may allocate the MT-RNTI, the ST-RNTI, or another radio network temporary identifier used for mode or state switching to the terminal device.

For example, 1 bit in the DCI indicates the mode switching signal, where the mode switching signal may also be referred to as mode information, switching information, or the like. This is not specifically limited herein. For example, 0 indicates the first mode (mode 1), and 1 indicates the second mode (mode 2). It may be understood that there is another representation method. For example, 1 indicates the first mode, and 0 indicates the second mode. This is not specifically limited herein.

For example, when 1 bit in the DCI indicates the state switching signal, the state switching information may also be referred to as state switching information, state information, or the like. This is not specifically limited herein. For example, 0 indicates the first state (state 1), and 1 indicates the second state (state 2). It may be understood that there is another representation method. For example, 1 indicates the first state, and 0 indicates the second state. This is not specifically limited herein.

In this embodiment of this application, 1 bit may alternatively refer to M bits, where M is a positive integer greater than or equal to 1, for example, 2 bits. This is not specifically limited in this application.

A size of a quantity of bits may depend on a quantity of modes or states. For example, the quantity of bits is equal to log2 (the quantity of modes or states) rounded up.

Optionally, in this embodiment of this application, DCI including the mode switching signal and DCI for data scheduling may share one piece of DCI. For example, the DCI may indicate the mode switching signal, and may be used to perform data scheduling. For example, the DCI includes an information field indicating data scheduling, such as a time-frequency domain resource allocation domain for data receiving or sending or a modulation and coding scheme field (MCS field).

The DCI that carries the mode switching signal may also be referred to as switching DCI or converting DCI.

Optionally, a data channel (for example, the physical downlink shared channel (physical downlink shared channel, PDSCH)) scheduled by using the DCI may carry data, or may carry higher layer signaling, for example, RRC signaling and MAC signaling, in other words, may carry higher layer configuration information.

Optionally, in this application, the switching DCI or the converting DCI may be dedicated DCI.

Optionally, the mode switching signal or the state switching signal in this embodiment of this application may also be referred to as the mode information, the state information, the first signal, the first information, or the like. This is not specifically limited herein.

Manner 2: The mode switching signal is indicated in the paging message (paging information):
The paging message is a signal carried in the PDSCH scheduled by using the DCI scrambled by the P-RNTI. In other words, a signal transmitted on the PDSCH carries the mode switching signal.

Optionally, the signal transmitted on the PDSCH may carry data.

It may be understood that one paging message may include information about one or more terminal devices, and indicate the one or more terminal devices to perform switch a mode.

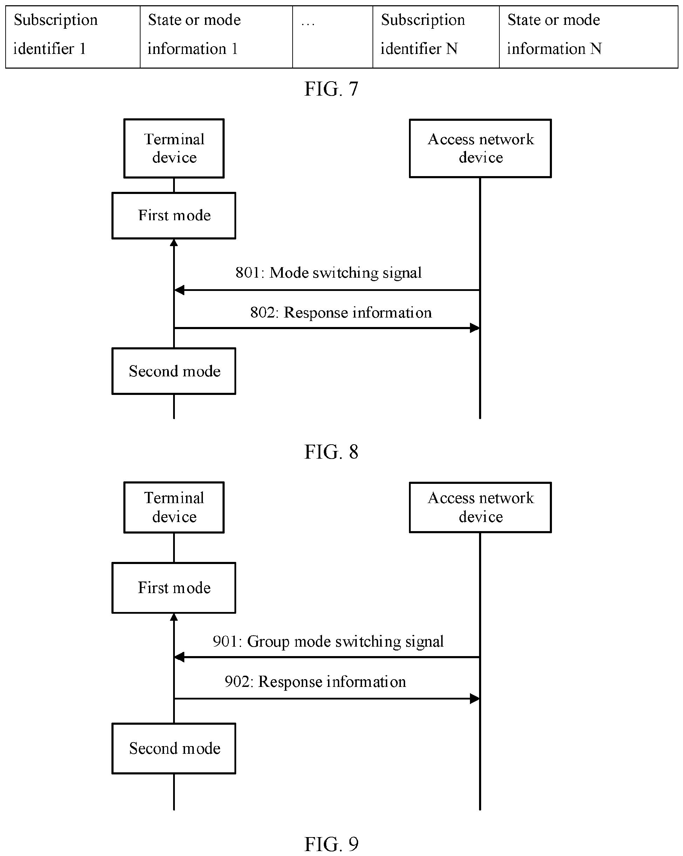

Refer to FIG. 7. The PDSCH may carry a plurality of subscription identifiers and mode or state information corresponding to a plurality of users.

For example, 1 bit in the DCI indicates the mode switching signal, where the mode switching signal may also be referred to as mode information, switching information, or the like. This is not specifically limited herein. For example, 0 indicates the first mode (mode 1), and 1 indicates the second mode (mode 2). It may be understood that there is another representation method. For example, 1 indicates the first mode, and 0 indicates the second mode. This is not specifically limited herein.

For example, when 1 bit in the DCI indicates the state switching signal, the state switching information may also be referred to as state switching information, state information, or the like. This is not specifically limited herein. For example, 0 indicates the first state (state 1), and 1 indicates the second state (state 2). It may be understood that there is another representation method. For example, 1 indicates the first state, and 0 indicates the second state. This is not specifically limited herein.

In this embodiment of this application, 1 bit may alternatively refer to M bits, where M is a positive integer greater than or equal to 1, for example, 2 bits. This is not specifically limited in this application.

A size of a quantity of bits may depend on a quantity of modes or states. For example, the quantity of bits is equal to log2 (the quantity of modes or states) rounded up.

Manner 3: The mode switching signal may be carried in the data channel.

For example, a data channel sent by the access network device may indicate that current data transmission is last data transmission. To be specific, information about the last data transmission is the mode switching signal, and may indicate the terminal device to switch the mode.

In a possible implementation, after successfully receiving the data, the terminal device switches from the second mode to the first mode by default.

In a possible implementation, after successfully receiving the data, the terminal device may send acknowledgment information, and the access network device receives the acknowledgment information, in other words, confirms that the terminal device switches from the second mode to the first mode.

Optionally, a mode switching signal manner used by the access network device may be predefined in the protocol, or may be notified by the access network device to the terminal device by using the higher layer signaling or the physical layer signaling. This is not specifically limited in this application.

According to the foregoing embodiment, the terminal device may implement one-click switching or fast switching, and switch from the first mode to the second mode (for example, directly enter the data transmission mode from the idle state or the inactive state), or switch from the second mode to the first mode, to reduce signaling overheads, reduce a switching delay, and meet data transmission requirements in different modes.

This embodiment of this application may be used as an independent embodiment, or may be combined with another embodiment of this application. This is not specifically limited in this application.

Optionally, there is a correspondence between the mode switching signal manner and the service type of the terminal device. This embodiment of this application may be used as an independent embodiment, or may be combined with another embodiment of this application. This is not specifically limited in this application.

Optionally, the mode switching signal may correspond to the service type of the terminal device, or the mode switching signal may include information about the service type of the terminal device.

Optionally, the access network device may include a service type identifier of the terminal device in a sent packet including the mode switching signal, and the access network device determines, based on the service type of the terminal device, the service type of the terminal device that receives the mode switching signal.

For example, the mode switching signal includes the service type identifier of the terminal device.

For example, the terminal device may send the mode switching signal and the service type identifier of the terminal device.

Optionally, when the access network device sends the mode switching signal or the state switching signal, the access network device sends the service type identifier of the terminal device. In this case, the access network device may determine, based on the service type identifier of the terminal device, the service type identifier of the terminal device that receives the mode switching signal.

Optionally, the terminal device and/or the access network device may determine the mode switching signal manner based on the service type of the terminal device.

The correspondence or a mapping relationship is predefined in the protocol, or may be configured by the access network device or the core network device for the terminal device by using signaling. This is not specifically limited herein.

Table 2 is an example of a correspondence between the terminal type and a mode switching signal manner. At least one row or at least one column in the table may be used as a correspondence, and Table 2 uses a row as an example.

**Table 2**

| Terminal type | Mode switching signal manner |
|---|---|
| Terminal type 1 | Manner as 1 |
| Terminal type 2 | Manner as2 |
| ... | ... |
| Terminal type m | Manner asm |

| | |
|---|---|
| m is a positive integer. The terminal type 1 to the terminal type m may be at least one of the following: the terminal of the eMBB service type, the terminal of the URLLC service type, the terminal of the IoT service type, the terminal of the CPE service type, the terminal of the V2X service type, the terminal of the AR/VR service type, and the like. | |

The manner as1 to the manner asm may be one or more of the mode switching signal manners described in this application, or may not be limited to the mode switching signal manners described in this application.

The following is an example of the correspondence:
When the service type of the first communication apparatus is the enhanced mobile broadband eMBB type, the mode switching signal may use the manner 2 or the manner 3;
when the service type of the first communication apparatus is the narrowband internet of things IoT type, the mode switching signal may use the manner 2;
when the service type of the first communication apparatus is the ultra-reliable low-latency communication URLLC type, the mode switching signal may use the manner 1; and/or
when the service type of the first communication apparatus is the CPE type, the mode switching signal may use the manner 1 or the manner 3.

Optionally, there is a correspondence between the mode switching signal manner and the service type and the mode of the terminal device.

For example, the terminal device and/or the access network device may determine the mode switching signal manner based on the service type and the mode of the terminal device.

The correspondence or a mapping relationship is predefined in the protocol, or may be configured by the access network device or the core network device for the terminal device by using signaling. This is not specifically limited herein.

Table 3 is an example of a correspondence between the terminal type and mode switching signal manners. At least one row or at least one column in the table may be used as a correspondence, and Table 3 uses a row as an example.

**Table 3**

| Terminal type | Mode switching signal manner in which the first mode is switched to the second mode | Mode switching signal manner in which the second mode is switched to the first mode |
|---|---|---|
| Terminal type 1 | Manner bs1 | Manner cs1 |
| Terminal type 2 | Manner bs2 | Manner cs2 |
| ... | ... | ... |
| Terminal type m | Manner bsm | Manner csm |

| | | |
|---|---|---|
| m is a positive integer. The terminal type 1 to the terminal type m may be at least one of the following: the terminal of the eMBB service type, the terminal of the URLLC service type, the terminal of the IoT service type, the terminal of the CPE service type, the terminal of the V2X service type, the terminal of the AR/VR service type, and the like. | | |

The manner bs1 to the manner bsm, and the manner cs1 to the manner csm may be one or more of the mode switching signal manners described in this application, or may not be limited to the mode switching signal manners described in this application.

The following is an example of the correspondence:
When the service type of the first communication apparatus is the enhanced mobile broadband eMBB type, a mode switching signal manner corresponding to the first mode is the manner 1, and a mode switching signal manner corresponding to the second mode is the manner 3;
when the service type of the first communication apparatus is the internet of things IoT type, a mode switching signal manner corresponding to the first mode is the manner 2, and a mode switching signal manner corresponding to the second mode is the manner 1;
when the service type of the first communication apparatus is the ultra-reliable low-latency communication URLLC type, a mode switching signal manner corresponding to the first mode is the manner 1, and a mode switching signal manner corresponding to the second mode is the manner 3; and/or
when the service type of the first communication apparatus is the CPE type, a mode switching signal manner corresponding to the first mode and the second mode is the manner 2, and a mode switching signal manner corresponding to the second mode is the manner 3.

According to the foregoing design, the terminal device and/or the access network device may determine the mode switching signal manner based on the service type, and may consider communication requirements of different service types, to reduce indication overheads, reduce CP overheads, and improve communication performance when a requirement of a multipath delay is met.

This embodiment of this application may be used as an independent embodiment, or may be combined with another embodiment of this application. This is not specifically limited in this application.

In some application scenarios, for example, a robotic arm, a plurality of (two or more) terminal devices receive data synchronously and complete a task simultaneously. The plurality of terminal devices in this scenario form a group of terminal devices. The following describes a case in which the group of terminal devices switch modes in batches.

The group of terminal devices may be referred to as a terminal device group, a group terminal device, a group terminal, a terminal group, or the like. This is not specifically limited in this application.

An example in which a first terminal is a head terminal device/anchor terminal device is used. The access network device may send a group mode switching signal to the head terminal device/anchor terminal device. The group mode switching signal indicates the plurality of terminal devices in the group of terminal devices to switch the modes. Generally, all terminal devices in the group of terminal devices switch the modes.

In other words, the group mode switching signal indicates a group of communication apparatuses to switch modes, and the first terminal is a device in the group of terminal devices.

The group mode switching signal may be carried in group switching DCI, in other words, the group switching DCI may include the group mode switching signal.

The terminal device may always detect the group switching DCI, or may detect the group switching DCI based on a moment indicated by configuration information. For example, the group switching DCI is detected at a moment when DRX is enabled, or the group switching DCI may be detected at another moment. This is not specifically limited in this application.

Optionally, the access network device may allocate group-MT-RNTI, group-ST-RNTI, or another radio network temporary identifier used for mode or state switching to the terminal. A value range of a group terminal identifier may be 0 to 65535. The group terminal identifier may be formed by identities of all the terminal devices in the group, or may be a dedicated group terminal identifier indicating the group of terminal devices. The group terminal identifier may be a terminal identifier at an access network layer, or may be a terminal identifier at a core network layer. This is not specifically limited herein. The group terminal identifier may be referred to as a group identifier for short.

In an application scenario, for example, the robotic arm, a plurality of chips/terminals receive data simultaneously and complete a task simultaneously. The plurality of chips/terminals are a group of terminal devices.

The access network device allocates a group identifier to the group of terminal devices, and DCI scrambled by the group identifier carries a mode switching signal.

For example, 1 bit in the DCI indicates the mode switching signal, where the mode switching signal may also be referred to as mode information, switching information, or the like. This is not specifically limited herein. For example, 0 indicates the first mode (mode 1), and 1 indicates the second mode (mode 2). It may be understood that there is another representation method. For example, 1 indicates the first mode, and 0 indicates the second mode. This is not specifically limited herein.

For example, when 1 bit in the DCI indicates a state switching signal, the state switching information may also be referred to as state switching information, state information, or the like. This is not specifically limited herein. For example, 0 indicates the first state (state 1), and 1 indicates the second state (state 2). It may be understood that there is another representation method. For example, 1 indicates the first state, and 0 indicates the second state. This is not specifically limited herein.

In this embodiment of this application, 1 bit may alternatively refer to M bits, where M is a positive integer greater than or equal to 1, for example, 2 bits. This is not specifically limited in this application.

A size of a quantity of bits may depend on a quantity of modes or states. For example, the quantity of bits is equal to log2 (the quantity of modes or states) rounded up.

Optionally, the group mode switching signal may be carried in the data channel.

For example, the data channel sent by the access network device may indicate that current data transmission is last data transmission. To be specific, information about the last data transmission is the group mode switching signal, and may indicate the terminal device to switch the mode. After successfully receiving the data, the terminal device switches from the second mode to the first mode.

Alternatively, after successfully receiving the data, the terminal device may send acknowledgment information, and the access network device receives the acknowledgment information, in other words, confirms that the terminal device switches from the second mode to the first mode.

Optionally, in this embodiment of this application, the group mode switching signal may use the mode switching signal manner. In other words, the description of the mode switching signal in this application is applicable to the group mode switching signal. This is not specifically limited in this application.

According to the foregoing manner, the terminal device may implement one-click switching or fast switching, and switch from the first mode to the second mode (for example, directly enter the data transmission mode from the idle state or the inactive state), to avoid random access and reduce RRC signaling overheads. The group switching signal is sent to only the first terminal in the group of terminal devices. Compared with sending a switching signal to each terminal, signal overheads can be reduced, energy of the access network device can be saved, and communication efficiency can be improved.

This embodiment of this application may be used as an independent embodiment, or may be combined with another embodiment of this application. This is not specifically limited in this application.

Optionally, in this embodiment of this application, the group switching DCI and the DCI for data scheduling may share one piece of DCI. For example, the DCI may indicate the group mode switching signal, and may be used to perform data scheduling. For example, the DCI includes an information field indicating data scheduling, such as a time-frequency domain resource allocation domain for data receiving or sending or a modulation and coding scheme field (MCS field).

The DCI that carries the group mode switching signal may also be referred to as group switching DCI or group converting DCI.

Optionally, group DCI may carry a plurality of subscription identifiers and mode or state information corresponding to a plurality of users.

Optionally, a data channel (for example, the PDSCH) scheduled by using the DCI may carry data, or may carry higher layer signaling, for example, RRC signaling and MAC signaling, in other words, may carry higher layer configuration information.

Optionally, in this application, the group switching DCI or the group converting DCI may be dedicated group DCI.

602: The terminal device sends response information to the access network device, and correspondingly, the access network device receives the response information.

Optionally, step 602 may alternatively be omitted. For example, the terminal device may switch the mode after receiving the mode switching signal. The terminal device may not send the response information, and the access network device may not receive the response information.

Optionally, when no response information is sent, the access network device may determine, based on a communication status of the terminal device, whether it is possible that the access network device sends the mode switching signal, but the terminal device fails to receive the mode switching signal. For example, when the access network device receives incorrect data transmission of the terminal device, or the access network device finds that data of the terminal device always fails to be transmitted, the access network device may determine that the terminal device fails to receive the mode switching signal. In this case, the access network device may send mode indication information to the terminal device, to implement a consistent understanding of the mode between the access network device and the terminal device.

Optionally, the response information may include a terminal identifier or a terminal group identifier.

After receiving the mode switching signal, the terminal device may send the response information. The response information indicates that the terminal device confirms receiving of the mode or state switching information. The response information may also be referred to as acknowledgment response information, or may also be referred to as a switching acknowledgment response, switching acknowledgment response information, or acknowledgment information. This is not specifically limited herein.

Optionally, step 602 may alternatively be omitted. For example, the terminal device may switch the mode after receiving the mode switching signal. The terminal device may not send the response information, and the access network device may not receive the response information.

Optionally, the response information may include a terminal identifier or a terminal group identifier.

The response information may be uplink control information (uplink control information, UCI), higher layer signaling, an uplink sequence, or an uplink signal. This is not specifically limited herein. The following describes the response information with examples.

Specifically, an acknowledgment operation may be performed in at least one of the following manners.

Manner 1: The response information is the UCI.

For example, the UCI may be scheduling request (scheduling request, SR) information, or acknowledgment/negative acknowledgment (acknowledgement/negative acknowledgement, ACK/NACK) information. This is not specifically limited herein.

For example, if the terminal device sends the SR, it indicates that the terminal device correctly receives the mode switching signal. Alternatively, if a data bearer value included in the SR information is greater than or equal to (greater than) X1, it indicates that the terminal device correctly receives the mode switching signal. If the data bearer value included in the SR information is less than (less than or equal to) X1, it indicates that the terminal device correctly receives the mode switching signal. This is not specifically limited herein.

For example, if the terminal device sends the ACK, it indicates that the terminal device correctly receives the mode switching signal. If the terminal device sends the NACK, it indicates that the terminal device fails to correctly receive the mode switching signal.

For example, a NACK only manner may be used, to be specific, the NACK is fed back only when reception fails, and no NACK is fed back when reception succeeds.

Optionally, the mode switching signal may be sent together with data feedback. For example, when the DCI schedules the data channel, the terminal device may receive data (for example, the PDSCH) carried in the data channel. If the PDSCH is successfully received, the terminal device feeds back the ACK, to indicate that the data is successfully received, and indicate that the mode or state information is successfully received. If the PDSCH fails to be received, the terminal device feeds back the NACK, to indicate that the data fails to be received, and indicate that the mode switching signal fails to be received.

Optionally, mode or state response information may be sent separately from the data feedback. For example, when the DCI schedules the data channel, the terminal device may receive data (for example, the PDSCH) carried in the data channel. If the PDSCH is successfully received, the terminal device feeds back the ACK, to indicate that the data is successfully received. For the mode or state switching information, the terminal device may send the ACK, to indicate that the mode switching signal is successfully received. If the PDSCH fails to be received, the terminal device feeds back the NACK, to indicate that the data fails to be received. For the mode switching signal, the terminal device may send the ACK, to indicate that the mode switching signal is successfully received. The terminal device may send two pieces of ACK/NACK information, where one indicates acknowledgment of the mode switching signal, and the other indicates acknowledgment of the data. A sequence is not limited, and may be predefined, or may be configured by the access network device.

For example, the manner may be an acknowledgment manner used when uplink synchronization of the terminal device has been performed, or the terminal device has determined a timing advance (timing advance, TA).

Manner 2: The response information is the higher layer signaling.

After receiving DCI (for example, the switching DCI or the converting DCI) that carries the mode switching signal, the terminal device may send the higher layer signaling, for example, RRC layer signaling or MAC layer signaling, to notify the access network device that the mode switching signal is successfully received.

For example, the manner may be an acknowledgment manner used when uplink synchronization of the terminal device has been performed, or the terminal device has determined a TA.

Manner 3: The response information is the uplink sequence or the uplink signal.

After receiving DCI (for example, the switching DCI or the converting DCI) that carries the mode or state information, the terminal device may send the uplink sequence, for example, a preamble (preamble) sequence, a sounding reference signal (sounding reference signal, SRS), or another uplink signal. This is not specifically limited herein.

For example, the manner may be an acknowledgment manner used when uplink synchronization of the terminal device has been performed, or the terminal device does not determine a TA.

The terminal device may roughly estimate a maximum TA value of the terminal device based on positioning or a time-based path through empirical learning or machine learning, and send an uplink sequence or an uplink signal based on the TA value. The terminal device may avoid using a physical random access channel (physical random access channel, PRACH) with long time to send the uplink sequence or the uplink signal (a shortest time at which the PRACH is used to send information is about 1 ms, and a long time at which the PRACH is used to send information is about 4 ms), to implement fast uplink synchronous access and mode switching.

In this case, the uplink sequence or the uplink signal sent by the terminal device may have a cyclic prefix (cyclic prefix, CP) length longer than an extended CP in the conventional technology. The access network device may determine the TA by receiving the uplink sequence or the uplink signal, and notify a user.

For the foregoing three manners, the access network device may determine that the terminal device correctly receives the mode switching signal after receiving the response information.

Optionally, there is a correspondence between the response information manner and the service type of the terminal device. This embodiment of this application may be used as an independent embodiment, or may be combined with another embodiment of this application. This is not specifically limited in this application.

Optionally, the terminal device and/or the access network device may determine the response information manner based on the service type of the terminal device.

The correspondence or a mapping relationship is predefined in the protocol, or may be configured by the access network device or the core network device for the terminal device by using signaling. This is not specifically limited herein.

Table 4 is an example of a correspondence between the terminal type and a response information manner, where at least one row or at least one column in the table may be used as a correspondence, and Table 4 uses a row as an example.

**Table 4**

| Terminal type | Response information manner |
|---|---|
| Terminal type 1 | Manner ay 1 |
| Terminal type 2 | Manner ay2 |
| ... | ... |
| Terminal type m | Manner aym |

| | |
|---|---|
| m is a positive integer. The terminal type 1 to the terminal type m may be at least one of the following: the terminal of the eMBB service type, the terminal of the URLLC service type, the terminal of the IoT service type, the terminal of the CPE service type, the terminal of the V2X service type, the terminal of the AR/VR service type, and the like. | |

The manner ay1 to the manner aym may be one or more of the response information manners described in this application, or may not be limited to the response information manners described in this application.

The following is an example of the correspondence:
When the service type of the first communication apparatus is the enhanced mobile broadband eMBB type, the response information may use the manner 1 or the manner 3;
when the service type of the first communication apparatus is the internet of things IoT type, the response information may use the manner 2 or the manner 3;
when the service type of the first communication apparatus is the ultra-reliable low-latency communication URLLC type, the response information may use the manner 1 or the manner 2; and/or
when the service type of the first communication apparatus is the CPE type, the response information may use the manner 1.

Optionally, there is a correspondence between the response information manner and the service type and the mode of the terminal device.

For example, the terminal device and/or the access network device may determine the response information manner based on the service type and the mode of the terminal device.

The correspondence or a mapping relationship is predefined in the protocol, or may be configured by the access network device or the core network device for the terminal device by using signaling. This is not specifically limited herein.

Table 5 is an example of a correspondence between the terminal type and response information manners, where at least one row or at least one column in the table may be used as a correspondence, and Table 5 uses a row as an example.

**Table 5**

| Terminal type | Response information manner in which the first mode is switched to the second mode | Response information manner in which the second mode is switched to the first mode |
|---|---|---|
| Terminal type 1 | Manner by 1 | Manner cy 1 |
| Terminal type 2 | Manner by2 | Manner cy2 |
| ... | ... | ... |
| Terminal type m | Manner bym | Manner cym |

| | | |
|---|---|---|
| m is a positive integer. The terminal type 1 to the terminal type m may be at least one of the following: the terminal of the eMBB service type, the terminal of the URLLC service type, the terminal of the IoT service type, the terminal of the CPE service type, the terminal of the V2X service type, the terminal of the AR/VR service type, and the like. | | |

The manner by 1 to the manner bym, and the manner cy1 to the manner cym may be one or more of the response information manners described in this application, or may not be limited to the modes or states described in this application.

The following is an example of the correspondence:
When the service type of the first communication apparatus is the enhanced mobile broadband eMBB type, a response information manner corresponding to the first mode is the manner 3, and a response information manner corresponding to the second mode is the manner 1;
when the service type of the first communication apparatus is the internet of things IoT type, a response information manner corresponding to the first mode is the manner 2, and a response information manner corresponding to the second mode is the manner 1;
when the service type of the first communication apparatus is the ultra-reliable low-latency communication URLLC type, a response information manner corresponding to the first mode is the manner 2 or the manner 3, and a response information manner corresponding to the second mode is the manner 1 or the manner 3; and/or
when the service type of the first communication apparatus is the CPE type, a response information manner corresponding to the first mode and the second mode is the manner 1 or the manner 3, and a response information manner corresponding to the second mode is the manner 1 or the manner 2.

According to the foregoing design, the terminal device and/or the access network device may determine the response information manner based on the service type, and may consider the communication requirements of different service types, to reduce the indication overheads, reduce the CP overheads, and improve communication performance when the requirement of the multipath delay is met.

Optionally, a transmission resource used by the terminal device to send the response information may be notified by the access network device to the terminal device, for example, including at least one of a time domain resource, a frequency domain resource, and a code resource (sequence) of the transmission resource. The transmission resource may be a common uplink transmission resource, namely, an uplink transmission resource shared by a plurality of terminals. Alternatively, the transmission resource may be a dedicated uplink transmission resource of the terminal device, namely, an uplink transmission resource that can be used by only the terminal.

Optionally, the code resource or sequence may be bound to the terminal device identifier.

Optionally, if the terminal device sends the response information on the common uplink transmission resource, the terminal device may send the terminal device identifier when sending the response information.

Optionally, the uplink transmission resource may alternatively be indicated in the switching DCI or the converting DCI. This is not specifically limited in this application. To be specific, the terminal device receives the switching DCI or the converting DCI, and transmits the response information on the time domain resource, the frequency domain resource, and/or the code resource indicated in the DCI.

Optionally, if the access network device can identify which terminal device fails to receive the mode switching signal and which terminal device successfully receives the mode switching signal, the access network device may indicate a mode or state of a single user in another manner (for example, the DCI in the manner 1) in this embodiment of this application.

Optionally, if the access network device cannot identify which terminal device fails to receive the mode switching signal and which terminal device successfully receives the mode switching signal, the access network device may continue to send the group mode switching signal after receiving the NACK information, to indicate modes or states of a group of users.

According to the method in this embodiment of this application, one-click switching of the mode of the terminal device can be implemented, for example, switching from the first mode to the second mode, or switching from the second mode to the first mode, thereby reducing signaling overheads. The acknowledgment information is designed to enhance reliability. The access network device and the terminal device have the consistent understanding of the mode or state. Compared with single-user indication, simultaneously indicating mode or state information of a plurality of terminal devices can further reduce signaling overheads.

This embodiment of this application may be used as an independent embodiment, or may be combined with another embodiment of this application. This is not specifically limited in this application.

When a terminal on which mode switching is to be performed is a group of terminal devices, for example, in the robotic arm scenario described in step 601, the group response information may be sent to the access network device by using only the first terminal (the head terminal device/the anchor terminal device). Alternatively, each terminal device in the group of terminal devices may send the group response information to the access network device. This is not specifically limited herein. It may be understood that, when the terminal on which mode switching is to be performed is a group of terminal devices, the group response information in this case may be the same as or different from group response information in a scenario controlled by each terminal device. For example, the group response information of the terminal device group may include a group identifier.

The group response information may be uplink control information (uplink control information, UCI), higher layer signaling, an uplink sequence, or an uplink signal. This is not specifically limited herein. The following describes the group response information with examples.
1. The group response information is the UCI.

For example, the UCI may be scheduling request (scheduling request, SR) information, or acknowledgment/negative acknowledgment (acknowledgement/negative acknowledgement, ACK/NACK) information. This is not specifically limited herein.

For example, if the terminal device group sends the SR, it indicates that the terminal device group correctly receives the mode switching signal. Alternatively, if a data bearer value included in the SR information is greater than or equal to (greater than) X1, it indicates that the terminal device group correctly receives the mode switching signal. If the data bearer value included in the SR information is less than (less than or equal to) X1, it indicates that the terminal device group correctly receives the mode switching signal. This is not specifically limited herein.

For example, if the terminal device group sends the ACK, it indicates that the terminal device group correctly receives the mode switching signal. If the terminal device group sends the NACK, it indicates that the terminal device group fails to correctly receive the mode switching signal.

For example, a NACK only manner may be used, to be specific, the NACK is fed back only when reception fails, and no NACK is fed back when reception succeeds.

Optionally, the mode switching signal may be sent together with data feedback. For example, when the DCI schedules the data channel, the terminal device group may receive data (for example, the PDSCH) carried in the data channel. If the PDSCH is successfully received, the terminal device group feeds back the ACK, to indicate that the data is successfully received, and indicate that the mode or state information is successfully received. If the PDSCH fails to be received, the terminal device group feeds back the NACK, to indicate that the data fails to be received, and indicate that the mode switching signal fails to be received.

Optionally, the mode or state group response information may be sent separately from the data feedback. For example, when the DCI schedules the data channel, the terminal device group may receive data (for example, the PDSCH) carried in the data channel. If the PDSCH is successfully received, the terminal device group feeds back the ACK, to indicate that the data is successfully received. For the mode or state switching information, the terminal device group may send the ACK, to indicate that the mode switching signal is successfully received. If the PDSCH fails to be received, the terminal device group feeds back the NACK, to indicate that the data fails to be received. For the mode switching signal, the terminal device group may send the ACK, to indicate that the mode switching signal is successfully received. The terminal device group may send two pieces of ACK/NACK information, where one indicates acknowledgment of the mode switching signal, and the other indicates acknowledgment of the data. A sequence is not limited, and may be predefined, or may be configured by the access network device.

For example, the manner may be an acknowledgment manner used when uplink synchronization of the terminal device has been performed, or the terminal device group has determined a timing advance (timing advance, TA).

2. The group response information is the higher layer signaling.

After receiving DCI (the switching DCI or the converting DCI) that carries the mode switching signal, the terminal device group may send the higher layer signaling, for example, the RRC layer signaling or the MAC layer signaling, to notify the access network device that the mode switching signal is successfully received.

For example, the manner may be an acknowledgment manner used when uplink synchronization of the terminal device has been performed, or the terminal device group has determined a TA.

3. The group response information is the uplink sequence or the uplink signal.

After receiving DCI (the switching DCI or the converting DCI) that carries the mode or state information, the terminal device group may send the uplink sequence, for example, a preamble (preamble) sequence, a sounding reference signal (sounding reference signal, SRS), or another uplink signal. This is not specifically limited herein.

For example, the manner may be an acknowledgment manner used when uplink synchronization of the terminal device has been performed, or the terminal device group does not determine a TA.

The terminal device group may roughly estimate a maximum TA value of the terminal device group based on positioning or a time-based path through empirical learning or machine learning, and send the uplink sequence or the uplink signal based on the TA value. The terminal device group may avoid using a physical random access channel (physical random access channel, PRACH) with long time to send the uplink sequence or the uplink signal (a shortest time at which the PRACH is used to send information is about 1 ms, and a long time at which the PRACH is used to send information is about 4 ms), to implement fast uplink synchronous access and mode switching.

In this case, the uplink sequence or the uplink signal sent by the terminal device group may have a cyclic prefix (cyclic prefix, CP) length longer than an extended CP in the conventional technology. The access network device may determine the TA by receiving the uplink sequence or the uplink signal, and notify a user.

In this application, the terminal device may send the acknowledgment information to the access network device, to enhance mode switching reliability, and the access network device and the terminal device have the consistent definition of the mode or the state.

603: The terminal device switches the mode.

In a possible implementation, after receiving the mode switching signal, the terminal device may switch the mode without sending the response information to the access network device. The mode switching signal indicates the terminal device to switch the mode. For example, this manner is applicable to a scenario in which the second mode is switched to the first mode.

In a possible implementation, after receiving the response information sent by the terminal device, the access network device determines, based on the response information, that the terminal device has switched the mode. For example, this manner is applicable to a scenario in which the first mode is switched to the second mode.

When the response information is that switching is agreed, the access network device may determine that the terminal device has switched the mode. For example, when the terminal device is in the first mode, and the mode switching signal indicates to switch to the second mode, the terminal device may switch from the first mode to the second mode.

According to the foregoing embodiment, the terminal device may implement one-click switching or fast switching, and switch from the first mode to the second mode (for example, directly enter the data transmission mode from the idle state or the inactive state), or switch from the second mode to the first mode, to reduce signaling overheads, reduce a switching delay, and meet data transmission requirements in different modes.

This embodiment of this application may be used as an independent embodiment, or may be combined with another embodiment of this application. This is not specifically limited in this application.

Refer to FIG. 8. FIG. 8 is a schematic diagram of a mode switching procedure. In FIG. 8, only an example in which a terminal device switches from a first mode (mode 1) to a second mode (mode 2) is used for description. It may be understood that the terminal device may alternatively switch from the second mode (mode 2) to the first mode (mode 1). A schematic flowchart of a mode switching method according to an embodiment of this application includes the following steps.

801: An access network device sends a mode switching signal to the terminal device, and correspondingly, the terminal device receives the mode switching signal sent by the access network device.

For a specific operation, refer to 601. Details are not described herein again.

802: The terminal device sends response information to the access network device, and correspondingly, the access network device receives the response information sent by the terminal device.

For a specific operation, refer to 602. Details are not described herein again, and this step may alternatively be omitted.

803: The terminal device switches a mode.

For a specific operation, refer to 603. Details are not described herein again.

For description from a perspective of a first communication apparatus, a schematic flowchart of the mode switching method in this embodiment of this application includes the following steps.

801': The first communication apparatus receives the mode switching signal. For a specific operation, refer to 601. Details are not described herein again.

802': The first communication apparatus sends the response information. For a specific operation, refer to 602. Details are not described herein again, and this step may alternatively be omitted.

803': The first communication apparatus switches a mode. For a specific operation, refer to 603. Details are not described herein again.

For description from a perspective of a second communication apparatus, a schematic flowchart of the mode switching method in this embodiment of this application includes the following steps.

801^{∗}: The second communication apparatus sends the mode switching signal. For a specific operation, refer to 601. Details are not described herein again.

802^{∗}: The second communication apparatus receives the response information. For a specific operation, refer to 602. Details are not described herein again, and this step may alternatively be omitted.

The access network device may send a mode switching signal. After receiving the signal, the terminal device may perform response information and quickly perform mode switching. Optionally, when sending the response information, the terminal device may also send data, so that the terminal device can quickly send and receive data. Further, the terminal device may send the response information, to be specific, notify the access network device that the switching signal is correctly received, and may respond with permission or denial, thereby implementing a consistent understanding of the state between the access network device and the terminal, and improving robustness of communication.

According to the foregoing embodiment, the terminal device may implement one-click switching or fast switching, and switch from the first mode to the second mode (for example, directly enter a data transmission mode from an idle state or an inactive state), or switch from the second mode to the first mode, to reduce signaling overheads, reduce a switching delay, and meet data transmission requirements in different modes.

This embodiment of this application may be used as an independent embodiment, or may be combined with another embodiment of this application. This is not specifically limited in this application.

It may be understood that, in some application scenarios, for example, in a robotic arm scenario, when a group of terminal devices synchronously switch modes:
if the access network device sends switching information to all terminal devices in the group of terminal devices, each terminal device performs mode switching based on the received switching information;
if the access network device sends switching information to only a first terminal (a head terminal device/anchor terminal device), in this case, another terminal device in the group of terminal devices, for example, a second terminal, may perform mode switching by receiving a mode switching indication from the first terminal;
if all terminal devices in the group of terminal devices send response information to the access network device, the access network device may determine, based on the received response information, that the terminal device performs mode switching; and
if only the first terminal (the head terminal device/anchor terminal device) sends the response information to the access network device, in this case, another terminal device in the group of terminal devices, for example, the second terminal, may perform mode switching by receiving the mode switching indication from the first terminal.

FIG. 9 is a schematic diagram of a mode switching procedure. In FIG. 9, only an example in which a terminal device switches from a first mode (mode 1) to a second mode (mode 2) is used for description. A schematic flowchart of a mode switching method according to an embodiment of this application includes the following steps.

901: An access network device sends a group mode switching request signal to the terminal device, and correspondingly, the terminal device receives the group mode switching request signal sent by the access network device.

For a specific operation, refer to 601. Details are not described herein again.

902: The terminal device sends response information to the access network device, and correspondingly, the access network device receives the response information sent by the terminal device.

For a specific operation, refer to 602. Details are not described herein again, and this step may alternatively be omitted.

903: The terminal device switches a mode.

For a specific operation, refer to 603. Details are not described herein again.

For description from a perspective of a first communication apparatus, a schematic flowchart of the mode switching method in this embodiment of this application includes the following steps.

901': The first communication apparatus receives a group mode switching signal.

For a specific operation, refer to 601. Details are not described herein again.

902': The first communication apparatus sends response information.

For a specific operation, refer to 602. Details are not described herein again, and this step may alternatively be omitted.

903': The first communication apparatus switches a mode.

For a specific operation, refer to 603. Details are not described herein again.

For description from a perspective of a second communication apparatus, a schematic flowchart of the mode switching method in this embodiment of this application includes the following steps.

901^{∗}: The second communication apparatus sends a group mode switching signal.

For a specific operation, refer to 601. Details are not described herein again.

902`: The second communication apparatus receives response information.

For a specific operation, refer to 602. Details are not described herein again, and this step may alternatively be omitted.

When mode switching is performed, a group switching signal is used. A switching signal is received by only one terminal device (for example, a first terminal) in a group of terminal devices. Compared with sending a switching signal to each terminal device by the access network device, signal overheads can be reduced, energy can be saved and efficiency is improved.

This embodiment of this application may be used as an independent embodiment, or may be combined with another embodiment of this application. This is not specifically limited in this application.

In a possible implementation, when the terminal device is in the second mode (mode 2), if the terminal device does not receive new downlink data (for example, DCI scheduling data) within preset duration, the terminal device may switch from the second mode (mode 2) to the first mode (mode 1), to reduce power consumption of the terminal device.

According to the foregoing embodiment, the terminal device may implement one-click switching or fast switching, and switch from the first mode to the second mode (for example, directly enter a data transmission mode from an idle state or an inactive state), or switch from the second mode to the first mode, to reduce signaling overheads, reduce a switching delay, and meet data transmission requirements in different modes.

This embodiment of this application may be used as an independent embodiment, or may be combined with another embodiment of this application. This is not specifically limited in this application.

The following embodiment provides a mode switching method.

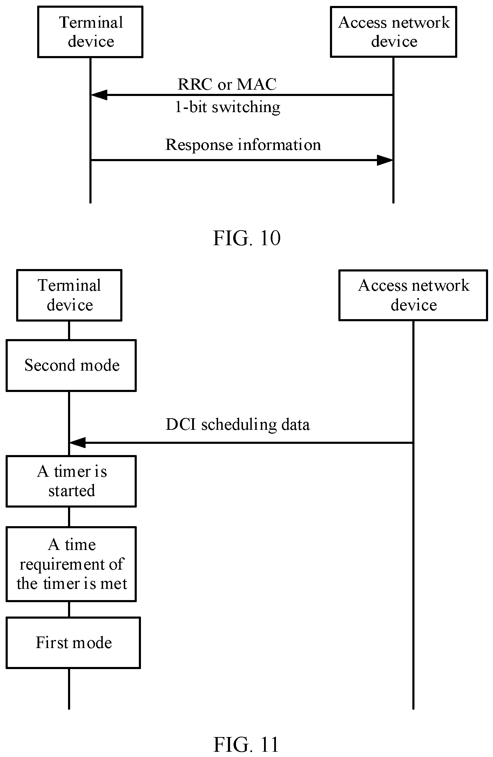

FIG. 10 is a schematic diagram of a mode switching procedure. In the following procedure, an access network device may send mode or state information. Further, a terminal device may send switching acknowledgment information, to notify the terminal device that switching information is correctly received, and the terminal device may quickly switch a mode or state after receiving the information. In this way, the access network device and the terminal device have the consistent understanding of the state or mode, and communication robustness is improved. A schematic flowchart of a mode switching method according to an embodiment of this application includes the following steps.

1001: The access network device sends a mode switching signal to the terminal device, and correspondingly, the terminal device receives the mode switching signal sent by the access network device.

The mode switching signal sent by the access network device may be 1-bit information (RRC signaling or MAC signaling) and used to indicate to switch the mode. For example, 0 indicates a first mode, and 1 indicates a second mode. Alternatively, 1 indicates a first mode, and 0 indicates a second mode.

In this embodiment of this application, 1 bit may alternatively refer to M bits, where M is a positive integer greater than or equal to 1, for example, 2 bits. This is not specifically limited in this application.

A size of a quantity of bits may depend on a quantity of modes or states. For example, the quantity of bits is equal to log2 (the quantity of modes or states) rounded up.

For a specific operation, refer to 601. Details are not described herein again.

1002: The terminal device sends response information to the access network device, and correspondingly, the access network device receives the response information sent by the terminal device.

After receiving information that carries the mode switching signal, the terminal device may send the response information. For a specific operation, refer to 602. Details are not described herein again, and this step may alternatively be omitted.

1003: The terminal device switches the mode.

For a specific operation, refer to 603. Details are not described herein again.

For description from a perspective of a first communication apparatus, a schematic flowchart of the mode switching method in this embodiment of this application includes the following steps.

1001': The first communication apparatus receives a mode switching signal. For a specific operation, refer to 601. Details are not described herein again.

1002': The first communication apparatus sends response information. For a specific operation, refer to 602. Details are not described herein again, and this step may alternatively be omitted.

1003': The first communication apparatus switches a mode. For a specific operation, refer to 603. Details are not described herein again.

For description from a perspective of a second communication apparatus, a schematic flowchart of the mode switching method in this embodiment of this application includes the following steps.

1001`: The second communication apparatus sends a mode switching signal. For a specific operation, refer to 601. Details are not described herein again.

1002`: The second communication apparatus receives response information. For a specific operation, refer to 602. Details are not described herein again, and this step may alternatively be omitted.

According to the foregoing embodiment, the terminal device may implement one-click switching or fast switching, and switch from the first mode to the second mode (for example, directly enter a data transmission mode from an idle state or an inactive state), or switch from the second mode to the first mode, to reduce signaling overheads, reduce a switching delay, and meet data transmission requirements in different modes.

This embodiment of this application may be used as an independent embodiment, or may be combined with another embodiment of this application. This is not specifically limited in this application.

The following embodiment provides a mode switching method. When a terminal device is in a second mode, the terminal device may switch to a first mode if the terminal device receives no information from an access network device within preset duration (for example, 100 milliseconds or 200 milliseconds).

This embodiment is described by using an example in which the preset duration is a timing device (a timer). FIG. 11 is a schematic diagram of a mode switching procedure.

For example, when a mode of a first communication apparatus is the second mode, the terminal device switches from the second mode to the first mode based on the timer.

Duration of the timer may be predefined in a protocol, or may be notified by the access network device to the terminal device by using signaling, for example, higher layer signaling such as RRC signaling or MAC signaling.

The terminal device starts the timer when receiving DCI, and if the terminal device receives no DCI when a time requirement of the timer is met (for example, when the timer is set to 100 ms, no DCI is received within 100 ms), the terminal device switches from the second mode to the first mode.

Optionally, there is a correspondence between the duration of the timer and a service type of the terminal device. The correspondence or a mapping relationship is predefined in the protocol, or may be configured by the access network device or a core network device for the terminal by using signaling. This is not specifically limited herein.

Table 6 is an example of a correspondence between a terminal type and duration of the timer, where at least one row or at least one column in the table may be used as a correspondence, and Table 6 uses a row as an example.

**Table 6**

| Terminal type | Duration of the timer |
|---|---|
| Terminal type 1 | TM 1 |
| Terminal type 2 | TM 2 |
| ... | ... |
| Terminal type ym | TM y |

| | |
|---|---|
| ym is a positive integer. The terminal type 1 to the terminal type ym may be at least one of the following: a terminal of an eMBB service type, a terminal of a URLLC service type, a terminal of an IoT service type, a terminal of a CPE service type, a terminal of a V2X service type, a terminal of an AR/VR service type, and the like. | |

The TM 1 to the TM y are duration of the timer. A unit may be ms, may be µs, or may be another unit of time, for example, 5 ms, 10 ms, 11 ms, 100 µs, and 50 µs.

The TM 1 to the TM y are duration of the timer. A unit may be a symbol, a timeslot, a subframe, a radio frame, or another unit of time, for example, 5 timeslots, 10 subframes, 10 radio frames, and 20 symbols. Terminal devices of different service types may be configured with timers of different duration, to meet different service requirements of various services and implement energy saving of terminal devices to different degrees. The duration of the timer may be determined based on the service type of the terminal device, or may be configured by terminal-level signaling.

According to the foregoing embodiment, the terminal device may implement fast switching, for example, directly enter an energy saving mode from a data transmission mode (switch from the second mode to the first mode), to reduce signaling overheads, reduce a switching delay, save energy of the terminal device, and improve communication efficiency.

This embodiment of this application may be used as an independent embodiment, or may be combined with another embodiment of this application. This is not specifically limited in this application.

The method in embodiments of this application is applied between the first communication apparatus and the second communication apparatus, may be applied between the access network device and the terminal device, or may be applied between terminal devices, between the terminal device and the core network device. In embodiments of this application, only an example in which the first communication apparatus is a terminal device and the second communication apparatus is an access network device is used for description, that is, a scenario in which the access network device communicates with the terminal device is used for description. Refer to the method shown in FIG. 6, and it may be understood that: If the first communication apparatus is a terminal device, and the second communication apparatus is a core network device, that is, in the scenario in which the terminal device communicates with the core network device, the steps performed by the access network device in the embodiment shown in FIG. 6 may be changed to the core network device. In other words, the core network device performs the steps performed by the access network device in the embodiment shown in FIG. 6. Details are not described herein again.

The following describes the core network device. The core network device is a device in a core network (core network, CN) that provides service support for a terminal. Currently, some examples of the core network device are: an access and mobility management function (access and mobility management function, AMF) entity, a session management function (session management function, SMF) entity, a user plane function (user plane function, UPF) entity, and the like, which are not enumerated herein. The AMF entity may be responsible for access management and mobility management of the terminal. The SMF entity may be responsible for session management, for example, session establishment of a user. The UPF entity may be a functional entity on a user plane, and is mainly responsible for a connection to an external network. It should be noted that an entity in this application may also be referred to as a network element or a functional entity. For example, the AMF entity may also be referred to as an AMF network element or an AMF functional entity. For another example, the SMF entity may also be referred to as an SMF network element or an SMF functional entity. This is not specifically limited herein.

Simply put, a mobile network can be divided into three parts: a base station subsystem, a network subsystem, and a system support part such as security management. The core network is in the network subsystem. A main function of the core network is to connect a call request or a data request from an air interface to different networks.

Functions of the core network device mainly include providing a user connection, user management, completing service carrying, and acting as an interface provided by a bearer network to the external network. Establishment of the user connection includes mobility management (mobility management, MM), calling management (calling management, CM), switching/routing, recording notification (completing a connection to an intelligent network peripheral device by using an intelligent network service), and other functions. The user management includes user description, quality of service (quality of service, QoS) (description of user service QoS is added), user communication recording (Accounting), virtual home environment (virtual home environment, VHE) (dialogue with an intelligent network platform provides the virtual home environment), and security (corresponding security measures provided by an authentication center include security management for a mobile service and security processing for external network access). Bearer connection (Access to) includes an external public switched telephone network (public switched telephone network, PSTN), an external circuit data network and packet data network, an internet (Internet) and intranets (Intranets), and a short message service (short message service, SMS) server of a mobile service provider. The core network can provide basic services such as mobile office, e-commerce, communication, entertainment services, travel and location-based services, telemetry (Telemetry)-simple message transmission services (monitoring and control), and so on.

Optionally, embodiments of this application may be applied to communication between the access network device and the terminal device, may be applied to communication between terminal devices, may be applied to communication between a satellite device and the access network device, or may be applied to communication between a satellite device and the terminal device, or communication between devices of other types. This is not specifically limited in this application.

Optionally, uplink data or the downlink data in embodiments of this application may alternatively be sidelink data, backhaul data, access data, data of another type, or the like. This is not specifically limited in this application.

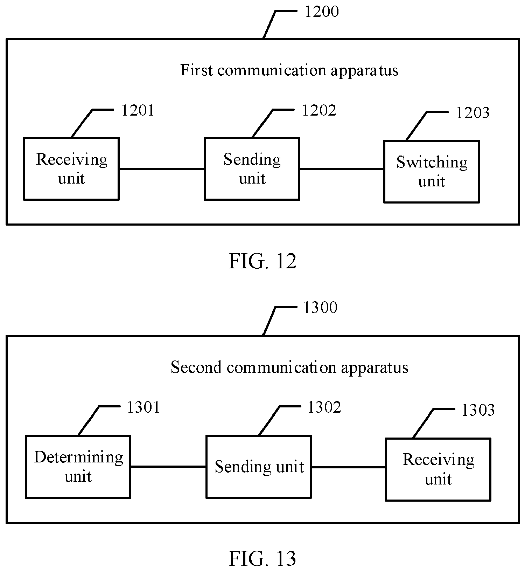

The foregoing describes the mode switching method in embodiments of this application. The following describes apparatuses in this embodiment of this application. Refer to FIG. 12. A first communication apparatus 1200 according to an embodiment of this application includes:
a receiving unit 1201, configured to receive a first signal sent by a second communication apparatus;
a sending unit 1202, configured to send response information to the second communication apparatus; and
a switching unit 1203, configured to switch a mode, and is further configured to switch from a second mode to a first mode based on a timer when a mode of the first communication apparatus is the second mode.

The units may perform the operations performed by the terminal device in any one of embodiments shown in FIG. 6 or FIG. 8 to FIG. 11. Details are not described herein again.

Refer to FIG. 13. A second communication apparatus 1300 according to an embodiment of this application includes:
a determining unit 1301, configured to determine a mode of a first communication apparatus;
a sending unit 1302, configured to send a first signal to the first communication apparatus; and
a receiving unit 1303, configured to receive response information sent by the first communication apparatus.

The units may perform the operations performed by the access network device in any one of embodiments shown in FIG. 6 or FIG. 8 to FIG. 11. Details are not described herein again.

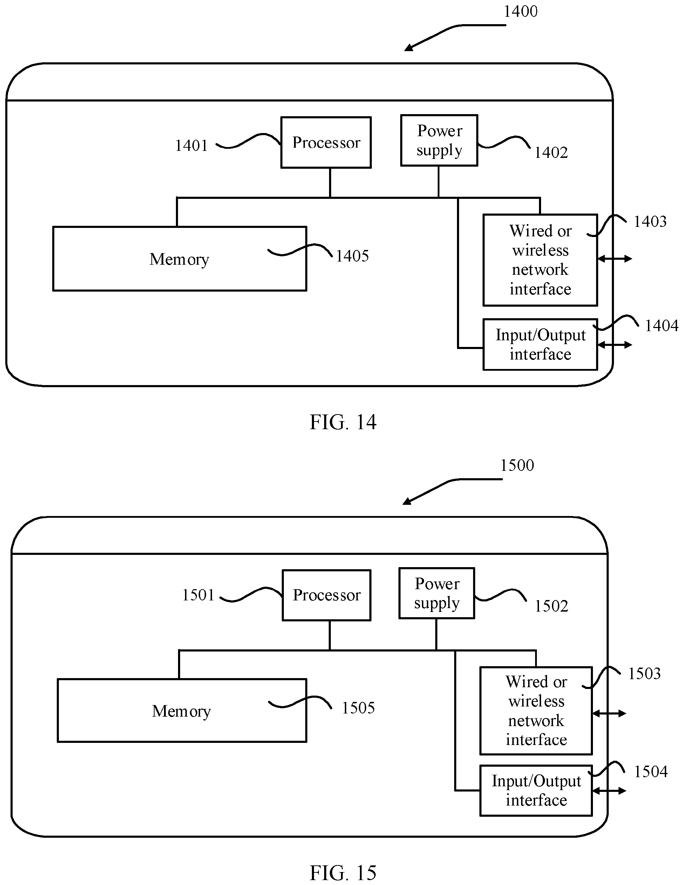

Refer to FIG. 14. An embodiment of this application provides a terminal device 1400. The terminal device may be used as a first communication apparatus. The terminal device 1400 may include one or more processors 1401 and a memory 1405. The memory 1405 stores program code. Further, the memory 1405 may store data.

The memory 1405 may be a volatile memory, a non-volatile memory, or a persistent memory. The program code stored in the memory 1405 may include one or more modules, and each module may include a series of instruction operations performed on the terminal device. Further, the processor 1401 may be configured to communicate with the memory 1405, and perform, on the terminal device 1400, the series of instruction operations in the memory 1405.

The terminal device 1400 may further include one or more power supplies 1402, one or more wired or wireless network interfaces 1403, and one or more input/output interfaces 1404.

The processor 1401 may perform operations performed by the terminal device in any one of embodiments shown in FIG. 6 or FIG. 8 to FIG. 11. Details are not described herein again.

Refer to FIG. 15. An embodiment of this application provides an access network device 1500. The access network device may be used as a second communication apparatus. The access network device 1500 may include one or more processors 1501 and a memory 1505. The memory 1505 stores program code. Further, the memory 1505 may store data.

The memory 1505 may be a volatile memory, a non-volatile memory, or a persistent memory. The program code stored in the memory 1505 may include one or more modules, and each module may include a series of instruction operations performed on the access network device. Further, the processor 1501 may be configured to communicate with the memory 1505, and perform, on the access network device 1500, the series of instruction operations in the memory 1505.

The access network device 1500 may further include one or more power supplies 1502, one or more wired or wireless network interfaces 1503, and one or more input/output interfaces 1504.

The processor 1501 may perform operations performed by the access network device in any one of embodiments shown in FIG. 6 or FIG. 8 to FIG. 11. Details are not described herein again.

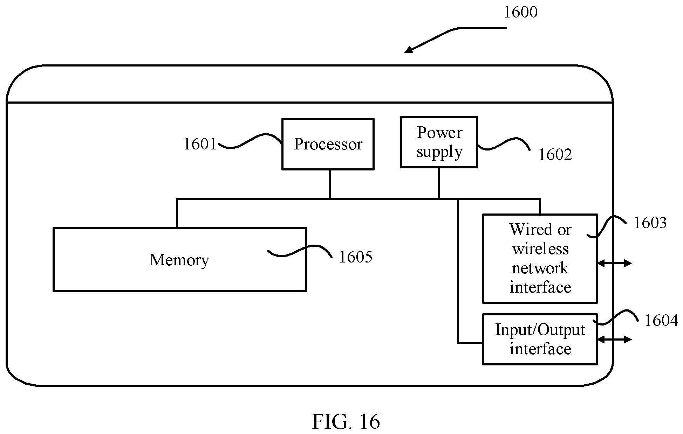

Refer to FIG. 16. An embodiment of this application provides a core network device 1600. The core network device may be used as a second communication apparatus. The core network device 1600 may include one or more processors 1601 and a memory 1605. The memory 1605 stores program code. Further, the memory 1605 may store data.

The memory 1605 may be a volatile memory, a non-volatile memory, or a persistent memory. The program code stored in the memory 1605 may include one or more modules, and each module may include a series of instruction operations performed on the core network device. Further, the processor 1601 may be configured to communicate with the memory 1605, and perform, on the core network device 1600, the series of instruction operations in the memory 1605.

The core network device 1600 may further include one or more power supplies 1602, one or more wired or wireless network interfaces 1603, and one or more input/output interfaces 1604.

The processor 1601 may perform operations performed by the core network device in any one of embodiments shown in FIG. 6 or FIG. 8 to FIG. 11. Details are not described herein again.

An embodiment of this application further provides a communication apparatus. The apparatus includes one or more processors, one or more memories, and one or more transceivers (each transceiver includes a transmitter Tx and a receiver Rx). The processors, the memories, and the transceivers are connected through a bus. The one or more transceivers are connected to one or more antennas. The one or more memories include computer program code. The transceiver may implement functions of the foregoing receiving unit or sending unit, and the transceiver may be a separate receiver and transmitter.

This application provides a network structure. The network structure may be applied to a device such as a terminal device, an access network device, or a core network device. The network structure is coupled to a memory, and is used to read and execute instructions stored in the memory, so that the network structure implements the method steps performed by the access network device, the terminal device, or the core network device in any one of the foregoing implementations.

In a possible design, the network structure is a chip or a system-on-a-chip.

This application provides a chip system. The chip system includes a processor, configured to support a terminal device, an access network device or a core network device to implement functions in the foregoing aspects, for example, send or process data and/or information in the foregoing method. In a possible design, the chip system further includes a memory, and the memory is configured to store necessary program instructions and necessary data. The chip system may include a chip, or may include a chip and another discrete component.

In another possible design, when the chip system is a chip in the terminal device, the access network device, or the core network device, the chip includes a processing unit and a communication unit. The processing unit may be, for example, a processor. The communication unit may be, for example, an input/output interface, a pin, or a circuit.

The processing unit may execute computer-executable instructions stored in a storage unit, so that the chip in the terminal device, the access network device, or the core network device performs the method steps performed by the terminal device, the access network device, or the core network device in any one of the foregoing embodiments. Optionally, the storage unit is a storage unit in the chip, for example, a register or a cache. Alternatively, the storage unit may be a storage unit that is in the terminal device, the access network device, or the core network device and that is located outside the chip, for example, a read-only memory (read-only memory, ROM), another type of static storage device that can store static information and instructions, or a random access memory (random access memory, RAM).

An embodiment of this application further provides a processor, configured to be coupled to a memory, and configured to perform the methods and the functions performed by the terminal device in any one of the foregoing embodiments. In a possible implementation, the processor and the memory are integrated together. In another possible implementation, the memory is located outside of the processor.

An embodiment of this application further provides a processor, configured to be coupled to a memory, and configured to perform the methods and the functions performed by the access network device in any one of the foregoing embodiments. In a possible implementation, the processor and the memory are integrated together. In another possible implementation, the memory is located outside of the processor.

An embodiment of this application further provides a processor, configured to be coupled to a memory, and configured to perform the methods and the functions performed by the core network device in any one of the foregoing embodiments. In a possible implementation, the processor and the memory are integrated together. In another possible implementation, the memory is located outside of the processor.

An embodiment of this application further provides a computer-readable storage medium. The computer-readable storage medium stores a computer program. When the computer program is executed by a computer, a method procedure related to the terminal device, the access network device, or the core network device in any one of the foregoing method embodiments is implemented. Correspondingly, the computer may be the terminal device, the access network device, or the core network device.

It should be understood that the processor in the terminal device, the access network device, the core network device, the chip system, and the like in the foregoing embodiments of this application, or the processor provided in the foregoing embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic component, a discrete gate, a transistor logic device, a discrete hardware component, or the like. The general-purpose processor may be a microprocessor, or the processor may be any conventional processor or the like.

It should be further understood that a quantity of processors in the terminal device, the access network device, the core network device, the chip system, or the like in the foregoing embodiments of this application may be one or more, and may be adjusted based on an actual application scenario. This is merely an example for description and is not limited herein. There may be one or more memories in embodiments of this application, and this may be adjusted based on an actual application scenario. This is merely an example for description and is not limited herein.

It should be further understood that the memory, the readable-storage medium, or the like in the terminal device, the access network device, the core network device, the chip system, and the like in the foregoing embodiments of this application may be a volatile memory or a nonvolatile memory, or may include both a volatile memory and a nonvolatile memory.

The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be further noted that when the terminal device, the access network device, or the core network device includes a processor (or a processing unit) and a memory, the processor in this application may be integrated with the memory, or the processor and the memory may be connected through an interface. This may be adjusted based on an actual application scenario, and is not limited.

An embodiment of this application further provides a computer program or a computer program product including a computer program. When the computer program is executed on a computer, the computer is enabled to implement a method procedure performed by the terminal device, the access network device, or the core network device in any one of the foregoing method embodiments. Correspondingly, the computer may be the terminal device, the access network device, or the core network device.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the procedures or functions are all or partially generated according to embodiments of this application. The computer may be a general-purpose computer, a special-purpose computer, a computer network, or another programmable apparatus.

The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center that integrate one or more usable media. The usable medium may be a magnetic medium (for example, a floppy disk, a hard disk, or a magnetic tape), an optical medium (for example, a DVD), a semiconductor medium (for example, a solid-state disk Solid State Disk (SSD)), or the like.

It may be clearly understood by a person skilled in the art that, for convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on this understanding, the technical solutions of this application essentially, or a part that contributes to the conventional technology, or all or a part of the technical solutions may be embodied in a form of a software product. The computer software product is stored in a storage medium, and includes several instructions used to enable a computer device (may be a personal computer, a server, or another network device) to perform all or some steps of the method in the embodiment in FIG. 6 in embodiments of this application. The storage medium includes various media that can store program code, such as a USB flash drive, a removable hard disk, a read-only memory (ROM, Read-Only Memory), a random access memory (RAM, Random Access Memory), a magnetic disk, or an optical disc.

In addition, the terms "include" and "have" and any variations thereof are intended to cover non-exclusive inclusion, so that a process, method, system, product, or device that includes a series of units is not necessarily limited to those units, but may include other units not explicitly listed or inherent to such a process, method, product, or device.

Names of messages/frames/information, modules, units, or the like provided in embodiments of this application are merely examples, and other names may be used provided that the messages/frames/information, modules, units, or the like have same functions.

Terms used in embodiments of this application are merely for the purpose of describing specific embodiments, but are not intended to limit this application. Terms "a", "the", and "this" of singular forms used in embodiments of this application are also intended to include plural forms, unless otherwise specified in a context clearly.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A mode switching method, comprising:
receiving, by a first communication apparatus, a first signal sent by a second communication apparatus, wherein the first signal indicates the first communication apparatus to switch a mode, the mode comprises a first mode and a second mode, and there is a correspondence between the mode and a service type of the first communication apparatus; and
switching, by the first communication apparatus, the mode.

2. The method according to claim 1, wherein the first signal is a physical layer signal.

3. The method according to claim 1 or 2, wherein that there is a correspondence between the mode and a service type of the first communication apparatus comprises:
when the service type of the first communication apparatus is an enhanced mobile broadband eMBB type, the first mode comprises an idle state and/or an inactive state, and the second mode comprises a connected state;
when the service type of the first communication apparatus is an internet of things IoT type, the first mode comprises an idle state, and the second mode comprises an inactive state and/or a connected state; or
when the service type of the first communication apparatus is an ultra-reliable low-latency communication URLLC type, the first mode comprises an idle state and/or an inactive state, and the second mode comprises a connected state.

4. The method according to any one of claims 1 to 3, wherein the first signal is downlink control information DCI, a signal carried on a physical downlink shared channel PDSCH, or a paging message.

5. The method according to any one of claims 1 to 4, wherein the method further comprises:
sending, by the first communication apparatus, response information to the second communication apparatus.

6. The method according to claim 5, wherein the response information comprises uplink control information UCI, an uplink sequence, an uplink signal, or higher layer signaling.

7. The method according to any one of claims 1 to 6, wherein that the first signal indicates the first communication apparatus to switch a mode comprises:
the first signal indicates a group of communication apparatuses to switch modes, wherein the first communication apparatus is an apparatus in the group of communication apparatuses.

8. The method according to any one of claims 1 to 7, wherein the method further comprises:
when the mode of the first communication apparatus is the second mode, switching, by the first communication apparatus, from the second mode to the first mode based on a timer.

9. The method according to any one of claims 1 to 8, wherein the method further comprises:
sending, by the first communication apparatus, second response information to the second communication apparatus.

10. The method according to claim 9, wherein the second response information comprises uplink control information UCI, an uplink sequence, an uplink signal, or higher layer signaling.

11. A mode switching method, comprising:
determining, by a second communication apparatus, a mode of a first communication apparatus; and
sending, by the second communication apparatus, a first signal to the first communication apparatus, wherein the first signal indicates the first communication apparatus to switch the mode, the mode comprises a first mode and a second mode, and there is a correspondence between the mode and a service type of the first communication apparatus.

12. The method according to claim 11, wherein the first signal is a physical layer signal.

13. The method according to claim 11 or 12, wherein that there is a correspondence between the mode and a service type of the first communication apparatus comprises:
when the service type of the first communication apparatus is an enhanced mobile broadband eMBB type, the first mode comprises an idle state and/or an inactive state, and the second mode comprises a connected state;
when the service type of the first communication apparatus is an internet of things IoT type, the first mode comprises an idle state, and the second mode comprises an inactive state and/or a connected state; or
when the service type of the first communication apparatus is an ultra-reliable low-latency communication URLLC type, the first mode comprises an idle state and/or an inactive state, and the second mode comprises a connected state.

14. The method according to any one of claims 11 to 13, wherein the first signal is downlink control information DCI, a signal carried on a physical downlink shared channel PDSCH, or a paging message.

15. The method according to any one of claims 11 to 14, wherein the method further comprises:
receiving, by the second communication apparatus, response information sent by the first communication apparatus.

16. The method according to claim 15, wherein the response information comprises uplink control information UCI, an uplink sequence, an uplink signal, or higher layer signaling.

17. The method according to any one of claims 11 to 16, wherein that the first signal indicates the first communication apparatus to switch the mode comprises:
the first signal indicates a group of communication apparatuses to switch modes, wherein the first communication apparatus is an apparatus in the group of communication apparatuses.

18. The method according to any one of claims 11 to 17, wherein the method further comprises:
receiving, by the second communication apparatus, second response information sent by the first communication apparatus.

19. The method according to claim 18, wherein the method further comprises:
sending, by the second communication apparatus, a mode switching indication to a third communication apparatus, wherein the third communication apparatus is an apparatus in the group of communication apparatuses.

20. The method according to claim 19, wherein the second response information comprises uplink control information UCI, an uplink sequence, an uplink signal, or higher layer signaling.

21. A communication apparatus, wherein the communication apparatus is used as a first communication apparatus, and the first communication apparatus comprises:
a receiving unit, configured to receive a first signal sent by a second communication apparatus, wherein the first signal indicates the first communication apparatus to switch a mode, the mode comprises a first mode and a second mode, and there is a correspondence between the mode and a service type of the first communication apparatus; and
a switching unit, configured to switch the mode.

22. The communication apparatus according to claim 21, wherein the first signal is a physical layer signal.

23. The communication apparatus according to claim 21 or 22, wherein when the service type of the first communication apparatus is an enhanced mobile broadband eMBB type, the first mode comprises an idle state and/or an inactive state, and the second mode comprises a connected state;
when the service type of the first communication apparatus is an internet of things IoT type, the first mode comprises an idle state, and the second mode comprises an inactive state and/or a connected state; or
when the service type of the first communication apparatus is an ultra-reliable low-latency communication URLLC type, the first mode comprises an idle state and/or an inactive state, and the second mode comprises a connected state.

24. The communication apparatus according to any one of claims 21 to 23, wherein the first signal is downlink control information DCI, a signal carried on a physical downlink shared channel PDSCH, or a paging message.

25. The communication apparatus according to any one of claims 21 to 24, wherein the first communication apparatus further comprises a sending unit, configured to send response information to the second communication apparatus.

26. The communication apparatus according to claim 25, wherein the response information comprises uplink control information UCI, an uplink sequence, an uplink signal, or higher layer signaling.

27. The communication apparatus according to any one of claims 21 to 26, wherein the first signal indicates a group of communication apparatuses to switch modes, and the first communication apparatus is an apparatus in the group of communication apparatuses.

28. The communication apparatus according to any one of claims 21 to 27, wherein the switching unit is further configured to: when the mode of the first communication apparatus is the second mode, switch from the second mode to the first mode based on a timer.

29. The communication apparatus according to any one of claims 21 to 28, wherein
the sending unit is further configured to send second response information to the second communication apparatus.

30. The communication apparatus according to claim 29, wherein the second response information comprises uplink control information UCI, an uplink sequence, an uplink signal, or higher layer signaling.

31. A communication apparatus, wherein the communication apparatus is used as a second communication apparatus, and the second communication apparatus comprises:
a determining unit, configured to determine a mode of a first communication apparatus; and
a sending unit, configured to send a first signal to the first communication apparatus, wherein the first signal indicates the first communication apparatus to switch the mode, the mode comprises a first mode and a second mode, and there is a correspondence between the mode and a service type of the first communication apparatus.

32. The communication apparatus according to claim 31, wherein the first signal is a physical layer signal.

33. The communication apparatus according to claim 31 or 32, wherein when the service type of the first communication apparatus is an enhanced mobile broadband eMBB type, the first mode comprises an idle state and/or an inactive state, and the second mode comprises a connected state;
when the service type of the first communication apparatus is an internet of things IoT type, the first mode comprises an idle state, and the second mode comprises an inactive state and/or a connected state; or
when the service type of the first communication apparatus is an ultra-reliable low-latency communication URLLC type, the first mode comprises an idle state and/or an inactive state, and the second mode comprises a connected state.

34. The communication apparatus according to any one of claims 31 to 33, wherein the first signal is downlink control information DCI, a signal carried on a physical downlink shared channel PDSCH, or a paging message.

35. The communication apparatus according to any one of claims 31 to 34, wherein the second communication apparatus further comprises a receiving unit, configured to receive response information sent by the first communication apparatus.

36. The communication apparatus according to claim 35, wherein the response information comprises uplink control information UCI, an uplink sequence, an uplink signal, or higher layer signaling.

37. The communication apparatus according to any one of claims 31 to 36, wherein the first signal indicates a group of communication apparatuses to switch modes, and the first communication apparatus is an apparatus in the group of communication apparatuses.

38. The communication apparatus according to any one of claims 31 to 37, wherein
the receiving unit is further configured to receive second response information sent by the first communication apparatus.

39. The communication apparatus according to claim 38, wherein
the sending unit is further configured to send a mode switching indication to a third communication apparatus, wherein the third communication apparatus is an apparatus in the group of communication apparatuses.

40. The communication apparatus according to claim 39, wherein the second response information comprises uplink control information UCI, an uplink sequence, an uplink signal, or higher layer signaling.

41. A communication apparatus, wherein the communication apparatus is used as a first communication apparatus, the first communication apparatus comprises a processor and a transmission interface, the transmission interface is configured to receive or send data, and the processor is configured to invoke software instructions stored in a memory, to perform the method according to any one of claims 1 to 10.

42. A communication apparatus, wherein the communication apparatus is used as a second communication apparatus, the second communication apparatus comprises a processor and a transmission interface, the transmission interface is configured to receive or send data, and the processor is configured to invoke software instructions stored in a memory, to perform the method according to any one of claims 11 to 20.

43. A communication apparatus, comprising a processor coupled to a memory, wherein the processor is configured to run instructions stored in the memory, so that the communication apparatus performs the method according to any one of claims 1 to 10 or the method according to any one of claims 11 to 20.

44. The communication apparatus according to claim 43, further comprising the memory.

45. A computer-readable storage medium, configured to store a computer program, wherein the computer program comprises instructions used to perform the method according to any one of claims 1 to 10 or 11 to 20.

46. A computer program product, wherein the computer program product comprises instructions, and when the instructions are run on a computer or a processor, the computer or the processor is enabled to perform the method according to any one of claims 1 to 10 or 11 to 20.

47. A communication apparatus, comprising an input/output interface and a logic circuit, wherein the input/output interface is configured to input or output a signal or data, and the input/output interface is specifically configured to output a first signal; and the logic circuit is configured to perform the method according to any one of claims 1 to 10 to perform mode switching.

48. A communication apparatus, comprising an input/output interface and a logic circuit, wherein the input/output interface is configured to input or output a signal or data, and the input/output interface is specifically configured to output a first signal; and the logic circuit is configured to perform the method according to any one of claims 11 to 20 to determine a mode of a first communication apparatus.

49. A communication system, comprising the communication apparatus according to any one of claims 21 to 30 and the communication apparatus according to any one of claims 31 to 40.
